(19) Europäisches Patentamt
European Patent Office
Office européen des brevets

(11) EP 3 299 518 B1

(12) EUROPEAN PATENT SPECIFICATION

(45) Date of publication and mention of the grant of the patent:
**02.12.2020 Bulletin 2020/49**

(21) Application number: **16799240.3**

(22) Date of filing: **18.05.2016**

(51) Int Cl.:
***D21H 13/10*** (2006.01) ***D21H 27/12*** (2006.01)
***D21H 13/20*** (2006.01) ***D21H 15/10*** (2006.01)
***C08G 73/06*** (2006.01) ***D01F 1/10*** (2006.01)
***D21H 13/24*** (2006.01) ***D21H 17/12*** (2006.01)

(86) International application number:
**PCT/CN2016/082431**

(87) International publication number:
**WO 2016/188351 (01.12.2016 Gazette 2016/48)**

# (54) FIBRE PAPER COMPRISING POD AND PREPARATION METHOD THEREFOR

FASERPAPIER MIT POD UND HERSTELLUNGSVERFAHREN DAFÜR

PAPIER DE FIBRE COMPRENANT POD, ET PROCÉDÉ DE PRÉPARATION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2015 CN 201510263612**
**22.05.2015 CN 201510263611**

(43) Date of publication of application:
**28.03.2018 Bulletin 2018/13**

(73) Proprietor: **Jiangsu Zanpod New Material Co., Ltd**
**Zhangqing Village, Yangshe Town**
**Zhangjiagang**
**Jiangsu (CN)**

(72) Inventors:
- **WU, Meng**
**Zhangjiagang**
**Jiangsu 215600 (CN)**
- **YANG, Yuanfeng**
**Zhangjiagang**
**Jiangsu 215600 (CN)**
- **ZHOU, Jianfeng**
**Zhangjiagang**
**Jiangsu 215600 (CN)**

(74) Representative: **Bottero, Carlo et al**
**Barzanò & Zanardo Milano S.p.A.**
**Via Borgonuovo, 10**
**20121 Milano (IT)**

(56) References cited:
**WO-A1-2012/082432**
**CN-A- 1 310 263**
**CN-A- 104 109 984**
**CN-A- 104 818 646**
**CN-A- 104 894 922**
**US-A1- 2014 184 371**
**US-A1- 2014 184 371**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 299 518 B1

## Description

Technical field

The present invention relates to a fibre paper comprising an aromatic polyoxadiazole (POD), a method for preparing the fibre paper, a use of the fibre paper, and an article comprising the fibre paper, such as an insulating material, a structural material or an electronic device or component.

Background art

The fibre paper prepared from various high performance synthetic fibres can be used in the manufacture of insulating materials, structural materials and electronic devices or components, and is widely used in various fields including power, electronics, aerospace and transportation. Among them, the fibre paper used in the manufacture of insulating materials needs to have good high temperature performance, so as to meet the requirement of electro-mechanical products used at elevated temperature. An increase in high temperature level of insulating materials can greatly improve the capacity of electro-mechanical products to withstand overheating and overloading, can improve their protection level, safety and reliability, while improving their efficiency and power. At present, aramid paper that is widely used in high temperature insulating materials in the market only has a high temperature level of 200-220°C, and has a shorter life at higher temperature, so it cannot adapt to the development trend of existing electrical technology.

Aromatic polyoxadiazole is a class of high temperature aromatic heterocyclic polymer, with aromatic group and oxadiazole ring alternately arranged in its molecular chain. Aromatic polyoxadiazole fibres mainly include poly(p-phenylene-1,3,4-oxadiazole) (p-POD) fibres and poly(m-phenylene-1,3,4-oxadiazole) (m-POD) fibres. Both the two kinds of fibre have a thermal decomposition temperature of up to more than 500°C, higher than that of meta-aramid, polysulfonamide and other high-temperature fibres. On the other hand, in long-term use at elevated temperature, the linear density of aromatic polyoxadiazole fibre substantially has no change, and the high temperature dimensional stability thereof is superior to that of meta-aramid, polyphenylene sulfide, polysulfonamide and other high-temperature fibres that are widely used at present.

However, in the prior art, there is still not a method for preparing an aromatic polyoxadiazole-containing fibre paper suitable for industrial production, to provide a fibre paper excellent in high-temperature-resistant property.

Contents of the invention

In the present invention, scientific and technical terms used herein have the same meaning as commonly understood by one of ordinary skill in the art, unless otherwise indicated. Also, operating steps involved herein are conventional steps that are widely used in the corresponding field. Meanwhile, for the purpose of better understanding the present invention, definitions and explanations of related terms are provided below.

As used herein, "aromatic polyoxadiazole" is a polymer having a molecular structure wherein aromatic group and oxadiazole group (as shown in formula (a)) are alternately arranged. The aromatic group includes, but is not limited to, monocyclic aryl groups such as 1,4-phenylene, 1,3-phenylene; fused ring aryl groups such as naphthylene, anthrylene; biaryl groups such as biphenylene, binaphthylene; diene phenylene ether; diphenylene ethylene. It should be noted that in the molecular structure of aromatic polyoxadiazole, the oxadiazole group may be replaced by a hydrazide group (as shown in formula (b)). Thus, in the present application, when "aromatic polyoxadiazole" is mentioned, it does not exclude the presence of a hydrazide group in the molecular structure, for example, the aromatic polyoxadiazole according to the present invention comprising a repeating unit shown in formula (c) may comprise a hydrazide group as shown in formula (b).

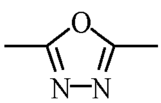

(a)

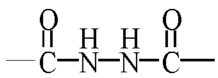

(b)

As used herein, the term "p-POD" refers to poly(p-phenylene-1,3,4-oxadiazole); in its molecular chain, the two repeating units shown in formula (c) and formula (d) are in a molar percentage of not less than 90% relative to the total repeating units.

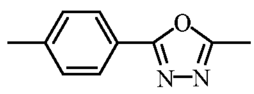 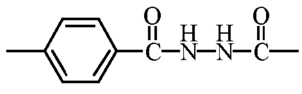

(c) (d)

As used herein, the term "m-POD" refers to poly(m-phenylene-1,3,4-oxadiazole); in its molecular chain, the two repeating units shown in formula (e) and formula (f) are in a molar percentage of not less than 90% relative to the total repeating units.

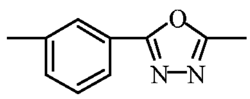 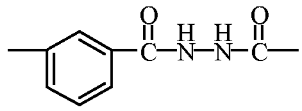

(e) (f)

As used herein, the terms "solution containing p-POD" and "p-POD solution" have the same meaning, and can be used interchangeably.
As used herein, the terms "solution containing m-POD" and "m-POD solution" have the same meaning, and can be used interchangeably.
As used herein, the terms "fibre" and "filament", which can be used interchangeably, refer to a relatively flexible, macroscopically homogeneous object having a high ratio of length to width (i.e., aspect ratio), wherein the width refers to a width of cross section perpendicular to the length. The cross section of the fibre may be any shape, but often an approximately circle. When the cross section of the fibre is an approximately circle, the width is a diameter of the circle. The fibres that are spun by a spinning device onto a bobbin in a package are referred to as continuous fibres. The fibres that can be cut into short lengths (for example, by a cutter) are referred to as chopped or staple fibres, and the property of the fibres are not changed during this process. The fibres that can be cut into even smaller lengths are referred to flocks. Yarns, multifilaments or tows comprise multiple fibres. Yarns can be intertwined and/or plied.
In particular, the fibre according to the present invention refers to a continuous, smooth and uniform fibrous material obtained by a spinning process such as melt spinning, dry spinning or wet spinning, using the related equipment. The spinning process includes, for example, extrusion, coagulation, stretching, washing, drying, heat treatment and/or rolling.
As used herein, the term "fibrid" refers to an extremely finely divided polymer product constituted by film-like or irregular fibrous fine particle. There are basically two types of fibrids: film-like fibrid, and fibrous or filamentous fibrid. The film-like fibrid is a substantially two-dimensional particle having a length of about 0.1 to 10 mm and a thickness of 0.1 -50 μm, preferably having an aspect ratio of 50 -1000. The fibrous or filamentous fibrid generally has a length of 2-3 mm, a width of 10-50 μm and a thickness of 0.1-1 μm. The method for preparing fibrids includes, but is not limited to, streaming a polymer solution into a liquid coagulation bath that is miscible or immiscible with the solvent of the solution. The stream of polymer solution is subjected to strenuous shearing forces and turbulence as the polymer is coagulated.
As used herein, the term "fibre paper" refers to a sheet-like object obtained by subjecting natural fibres and/or synthetic fibres as raw material to papermaking. The natural fibres include, but are not limited to, mineral fibres such as asbestos fibres; plant fibres such as cotton fibres and wood fibres; the synthetic fibres include, but are not limited to, inorganic fibres such as carbon fibres and metal fibres; organic fibres such as viscose fibres, acrylic fibres, polyester fibres and aromatic polyoxadiazole fibres.
As used herein, the term "resin" refers to an organic polymer which has a softening or melting range after heating and a tendency to flow under external force during softening, and which at room temperature is solid or semi-solid, and sometimes may also be liquid.
As used herein, the term "thermosetting resin" refers to a resin that undergoes chemical changes after heating, hardens progressively, and does not soften nor can be dissolved upon heating, including but not limited to epoxy resin, phenolic resin, melamine resin, isocyanates resin, polyimide resin and the like. The term "thermosetting resin fibre" refers to a fibre made from a thermosetting resin.
As used herein, the term "thermoplastic resin" refers to a resin that can soften upon heating and cure upon cooling repeatedly, including but not limited to polyester, polyamide, polyvinyl chloride and the like. The term "thermoplastic resin fibre" refers to a fibre made from a thermoplastic resin.
As used herein, the term "original beating degree" is used to characterize the degree of brooming and fibrillation of fibrids, and reflect the nature of fibrids. The term "mechanical beating degree" is used to characterize the degree that fibrids are cut, wetted, broomized and fibrillated after mechanical beating. Typically, fibrids can get a higher beating

degree than the original beating degree after mechanical beating.

As used herein, the term "grammage" refers to a mass of paper or paperboard of known area.

As used herein, the term "tightness" refers to a mass of paper or paperboard per cubic meter, also called apparent density.

As used herein, the term "tensile strength" refers to the maximum force that a sample of a unit width can bear under a certain test condition.

As used herein, the term "elongation" refers to a ratio of elongation to the original length of a sample when it breaks under tension.

As used herein, the term "tear strength" refers to a force required to tear a sample for a certain length.

As used herein, the term "dielectric strength" refers to the maximum voltage that a sample can bear per unit thickness at breakdown.

As used herein, the term "viscosity" refers a fluid's resistance to flow, and is caused by internal friction between fluid layers. At a certain temperature, shear stress of a given fluid divided by shear rate is equal to a constant, and this constant is called dynamic viscosity or absolute viscosity, usually briefed as viscosity. Thus, the term "viscosity" is used herein to represent both the property of resistance to flow in fluid and the parameter to measure this property as defined above.

As used herein, the term "apparent viscosity" refers to a viscosity value obtained when the viscosity value has a minimum change and tends to be stable over a period of time at a certain temperature and at a certain shear rate, for a non-Newtonian fluid, such as a polymer solution.

As used herein, the terms "intrinsic viscosity" and "intrinsic viscosity number", which can be used interchangeably, refer to a reduced viscosity or a logarithmic viscosity when the concentration of a solution is infinitely diluted. This viscosity value does not vary with concentration, and depends on the structure and molecular weight of a polymer, at a given concentration and in a given solvent. Thus, this viscosity value can be used as a characteristic value of a polymer, and is often used to reflect the molecular weight for the same type of polymers.

As used herein, the term "fuming sulfuric acid" refers to a sulfuric acid solution of sulfur trioxide in which sulfur trioxide is present in an amount of, for example, 5-50 wt% or 50-70 wt%, such as 5 wt%, 20 wt%, 25 wt% 40 wt%, 50 wt% and the like.

As used herein, the term "hydrazine salt" refers to a salt formed by hydrazine and inorganic acid, including but not limited to hydrazine sulfate, hydrazine chloride, hydrazine nitrate.

As used herein, the term "dispersibility" refers to a property of fibres that are homogeneously dispersed into single fibres in a dispersion medium such as water without agglomeration, and suspended in the dispersion medium without precipitation. The dispersibility of fibres usually can be evaluated by observing and/or photographing a fibre suspension with an appropriate transparent container, to directly investigate the distribution and flocculation of the fibres; or by testing with a commercially available instrument such as a pattern recognition device and software. Or, the dispersibility of fibres can be evaluated by testing the uniformity, fibre distribution and the like of a fibre product, such as a fibre sheet.

The dispersibility of fibres is expressed as the number of undispersed fibres in a certain amount of fibres, for example, the number of undispersed fibres in 100 g of fibres. The smaller the number is, the better the dispersibility of fibres will be.

As used herein, the term "fineness" is one of dimensionals of a fibre, indicating the thickness of the fibre.

As used herein, the term "defect" refers to a defect occurred on a fibre that weaken the fibre's quality or performance and/or affect the fibre's appearance. The defect includes ossified filament, closed filament, hard filament, spot filament, undrawn filament, blob of viscose, stuck fibre and other abnormal fibres. The number of defects is expressed by defect content, that is, the amount of defects contained in a certain amount of fibres.

As used herein, the term "capping agent" refers to an agent that terminates polymerization by reacting with a polymer's end group. In the synthesis of aromatic polyoxadiazoles, the capping agent used include, but is not limited to, aliphatic and aromatic compound having monocarboxyl or monoamino group, such as acetic acid, propionic acid, benzoic acid, n-butylamine, aniline and the like.

As used herein, the term "particle" refers to a state of matter which is characterized by the presence of discrete particles, pellets, beads or granules irrespective of their size, shape, or morphology.

As used herein, the term "15-50 $\mu$m particles "refers to particles having a size (i.e., the diameter in the longest dimension of the particles) of 15-50 $\mu$m, such as particles having a size of 15-20 $\mu$m, particles having a size of 20-30 $\mu$m, particles having a size of 30-40 $\mu$m, and particles having a size of 40-50 $\mu$m.

As used herein, the term "cyclization degree" refers to a molar ratio of the oxadiazole group to the sum of oxadiazole group and hydrazide group in an aromatic polyoxadiazole.

As used herein, the term "specific fracture strength" refers to fracture strength of fibres per unit linear density (before stretched) in a tensile test.

As used herein, the term "wt%" refers to mass percentage.

As used herein, the term "about" should be understood by a person skilled in the art, and will vary to some extent according to the context in which it is used. If the term "about" is vague in its meaning to a person skilled in the art according to the context in which it is used, then it means a deviation no more than $\pm$10% of the value or range.

As used herein, the term "insulating material" refers to an electrical insulating material, also known as a dielectric, that is, a material that isolates a charged body from other parts; it can be classified into three categories: gas, liquid, and solid, where solid insulating materials include but are not limited to insulating varnishes, insulating adhesives, insulating papers, insulating fibres and insulating impregnated fibre products, varnished cloths, varnished tubes, electrical films and adhesive tapes and the like.

As used herein, the term "insulating paper" refers to a sheet-like article used as an insulating material, which is made by papermaking from natural fibre and/or synthetic fibre.

As used herein, the terms "composite insulating material" and "insulating composite", which have the same meaning and can be used interchangeably, refer to an insulating material consisting of two or more materials of different properties, including but not limited to composite insulating papers and laminated insulating articles.

As used herein, the term "composite insulating paper" refers to an insulating article obtained from an insulating paper and other materials such as a film through laminating and gluing, wherein the film includes but is not limited to polyester film and polyimide film.

As used herein, the term "laminated insulating article" refers to an insulating article having a layered structure in which two or more layers of substrate are bonded together through laminating and hot pressing. The substrate includes, but is not limited to, fibres, cloth and fibre paper; preferably, the substrate is impregnated with an adhesive including, but not limited to, various thermosetting resins such as phenolic resin, epoxy resin, polyimide resin and the like. The laminated insulating article may be a plate, a tube, a bar or other shape, or may be processed into various insulating and structural parts.

As used herein, the term "structural material" refers to a material used to fabricate a stress component based on its mechanical properties, at the same time, there are also certain requirements on its physical or chemical properties (e.g., gloss, thermal conductivity, radiation resistance, corrosion resistance or oxidation resistance).

As used herein, the term "sandwich material" is a material having a sandwich structure, typically consisting of a middle core layer sandwiched between plates on both sides, including but not limited to a foam sandwich material, a corrugated board sandwich material, and a honeycomb sandwich material.

As used herein, the term "honeycomb sandwich material" refers to a sandwich structure material in which the core layer is a honeycomb material, including but not limited to, aluminum honeycomb, fiber-reinforced plastics honeycomb, and fibre paper honeycomb.

As used herein, the term "electronic device or component" refers to electronic component and component of small electric machine or instrument, which are often composed of multiple parts and may be used universally in the same category of products, including but not limited to resistor, capacitor, potentiometer, electron tube, electronic transformer, relay, printed circuit board, integrated circuit and the like.

As used herein, the term "printed circuit board" refers to one type of electronic device or component, which comprises a copper clad laminate (CCL) as a base material on which conductive leads are printed or etched and/or other electronic device or component is mounted. The copper clad laminate is a plate-like material made by impregnating a reinforcing material with a resin, covering it on one or both sides with a copper foil, and then hot pressing. The reinforcing material includes, but is not limited to, fibre cloth and fibre paper.

In order to overcome the drawback of poor high temperature resistance in the existing fibre paper, the present invention provides a method for preparing fibre paper using p-POD chopped fibre and/or m-POD fibrid as raw material, and a fibre paper prepared by the method. Accordingly, the present invention deals with the following technical solutions:

(I) Fibre paper comprising p-POD chopped fibre (not according to the invention)

The fibre paper comprises a p-POD chopped fibre and a binder A, and optionally further comprises a binder B; or is made from p-POD chopped fibre, a binder A and optionally a binder B; the binder A is a fibrid (e.g., an m-POD fibrid), the binder B is a thermosetting resin fibre and/or a thermoplastic resin fibre; and the p-POD chopped fibre has an initial decomposition temperature of higher than 500°C, for example higher than 505°C, higher than 508°C, higher than 510°C or higher than 515°C.

In one preferred embodiment, the p-POD chopped fibre further has at least one of the following characteristics:

(a) the p-POD chopped fibre has a specific fracture strength of greater than 2.50 cN/dtex, for example greater than 2.60 cN/dtex, greater than 3.00 cN/dtex, greater than 3.30 cN/dtex or greater than 3.60 cN/dtex;

(b) the p-POD chopped fibre has a cyclization degree of greater than 80%, for example greater than 82%, greater than 85%, greater than 88%, greater than 90%, greater than 92%, greater than 95%, greater than 97%, greater than 98% or greater than 99%;

(c) the p-POD chopped fibre has a dispersibility of less than 10 fibres/100 g, for example less than 9 fibres /100 g, less than 8 fibres /100 g, less than 7 fibres /100 g, less than 6 fibres /100 g, less than 5 fibres /100 g, less than 4 fibres /100g or less than 3 fibres /100 g; and

(d) the p-POD chopped fibre has a defect content of less than 5 mg/100 g, for example less than 4 mg/100 g, less than 3 mg/100 g, less than 2 mg/100 g or less than 1 mg/100 g.

In one preferred embodiment, the p-POD chopped fibre has one, two, three or four of the above characteristics.

In one preferred embodiment, the p-POD chopped fibre has a fineness of 0.1-5.0 D, for example 0.1-1.0 D, 0.1-4.0 D, 1.5-3.0 D or 3.0-5.0 D.

In one preferred embodiment, the p-POD chopped fibre has a length of 2-20 mm, for example 2-15 mm, 5-10 mm, 12-20 mm or 6-18 mm.

In one preferred embodiment, the p-POD chopped fibre has an aspect ratio of 100-30,000, for example 100-500, 500-1,000, 100-1,000, 1,000-5,000, 5,000-10,000, 10,000-15,000, 15,000-20,000, 20,000-25,000 or 25,000-30,000.

In one preferred embodiment, the p-POD chopped fibre has an initial decomposition temperature of higher than 500°C, and a cyclization degree of greater than 90%.

In one preferred embodiment, the p-POD chopped fibre has a specific fracture strength of greater than 3.30 cN/dtex and a dispersibility of less than 10 fibres /100 g.

In one preferred embodiment, the p-POD chopped fibre has a specific fracture strength of greater than 3.30 cN/dtex and a defect content of less than 5 mg/100 g.

In one preferred embodiment, the p-POD chopped fibre has a fineness of 0.1-5.0 D and a length of 2-20 mm.

In one preferred embodiment, the p-POD chopped fibre has a specific fracture strength of greater than 2.50 cN/dtex, a dispersibility of less than 10 fibres /100 g and a defect content of less than 5 mg/100 g.

In one preferred embodiment, in the fibre paper, the p-POD chopped fibre, the binder A and the binder B are in a mass ratio of 30-70: 20-70: 0-10; for example, 30-70: 30-70: 0,40-60: 30-60: 0-10, 35-70: 25-65: 0-5 or 30-60: 30-60: 10.

In one preferred embodiment, the fibre paper comprises the p-POD chopped fibre and the binder A; preferably, the p-POD chopped fibre and the binder A are in a mass ratio of 30-70: 30-70, for example 30-60: 40-70, 40-65: 35-60 or 50-70: 30-50, for example, 30: 70, 40: 60, 50: 50, 60: 40 or 70: 30.

In one preferred embodiment, the binder A is an m-POD fibrid.

In one preferred embodiment, the p-POD chopped fibre is prepared from a solution containing a p-POD polymer and having at least one of the following characteristics:

(a) the solution comprises a p-POD polymer and fuming sulfuric acid, wherein the p-POD polymer has an intrinsic viscosity of not less than 1.70 dL/g, for example, not less than 1.73 dL/g, not less than 1.95 dL/g, not less than 2.02 dL/g or not less than 2.11 dL/g; and has an apparent viscosity of 50-120 Pa·S at a temperature of 100-160°C, for example, 50-80 Pa·S, 80-120 Pa·S, 70-120 Pa·S, 100-110 Pa·S or 110-120 Pa·S; preferably, the apparent viscosity is 70-120 Pa·S, for example 70-80 Pa·S, 80-90 Pa·S, 90-100 Pa·S, 100-110 Pa·S or 110-120 Pa·S;

(b) the solution does not comprise a capping agent, for example, the solution does not comprise benzoic acid or aniline; for example, the solution does not comprise benzoic acid; and

(c) the solution has a content of 15-50 μm particles of less than 100/mL, for example, less than 90/mL, less than 80/mL, less than 70/mL, less than 60/mL, less than 50/mL, less than 40/mL, less than 30/mL, less than 20 /mL or less than 10/mL.

In one preferred embodiment, the solution containing the p-POD polymer has one, two or three of the above characteristics.

In one preferred embodiment, the solution comprises a p-POD polymer and fuming sulfuric acid, wherein the p-POD polymer has an intrinsic viscosity of not less than 1.70 dL/g, and has an apparent viscosityof 70-120 Pa·S at a temperature of 100-160°C, for example 70-80 Pa·S, 80-90 Pa·S, 90-100 Pa·S, 100-110 Pa·S or 110-120 Pa·S, such as 72 Pa·S, 82 Pa·S, 88 Pa·S, 92 Pa·S or 113 Pa·S.

In one preferred embodiment, the solution comprises a p-POD polymer and fuming sulfuric acid and does not comprise benzoic acid.

In one preferred embodiment, the solution comprises a p-POD polymer and fuming sulfuric acid, and has a content of 15-50 μm particles of less than 30/mL.

In one preferred embodiment, the solution containing the p-POD polymer is prepared by a method comprising the following steps:

(1) combining a fuming sulfuric acid, a terephthalic acid and a hydrazine salt to form a reaction mixture, in which the hydrazine salt is added in an amount of 30-85%, for example 30-75%, 30-70%, 30-50%, 35-85%, 35-50%,

35.5-60%, 37.5-70%, 40-85%, 40-70%, 40-50%, 50-80%, 50-70%, 50-60% or 70-80%, relative to the total amount of the hydrazine salt to be added in the method; the fuming sulfuric acid is added in an amount of 30-95%, for example 30-87.5%, 30-70%, 30-50%, 30-36.8%, 36.8-87.5%, 40-95%, 40-50%, 50-90%, 50-70%, 60-70%, 70-90% or 80-95%, relative to the total amount of the fuming sulfuric acid to be added in the method; and subjecting the reaction mixture to a reaction for 1-3 hours, for example 1-1.5 hours, 1-2 hours, 1.5-2 hours, 2-2.5 hours, 2-3 hours or 2.5-3 hours;

(2) adding the remaining hydrazine salt and the remaining fuming sulfuric acid, and continuing the reaction for 1-5 hours, for example 1-2 hours, 1-3 hours, 1-4 hours, 2-3 hours, 2-4 hours, 3-4 hours, 3-5 hours or 4-5 hours;

wherein the total amounts of terephthalic acid, hydrazine salt and fuming sulfuric acid are in a molar ratio of 1: 0.4-1.5: 8-20, for example 1: 0.4-1: 8-10, 1: 0.8-1.5: 8-19, 1: 1-1.5: 10-15, 1: 0.5-1: 15-20 or 1: 0.8-1.3: 8-19.

In one preferred embodiment, the reaction in the step (1) is carried out at a temperature of 70-120°C, for example 70-80°C, 80-90°C, 90-100°C, 100-110°C or 110-120°C.

In one preferred embodiment, the reaction in the step (2) is carried out at a temperature of 100-160°C, for example 100-110°C, 110-120°C, 120-130°C, 130-140°C, 140-150°C or 150-160°C.

In one preferred embodiment, the hydrazine salt is selected from the group consisting of hydrazine sulfate and hydrazine chloride; preferably, the hydrazine salt is hydrazine sulfate.

In one preferred embodiment, the fuming sulfuric acid has a sulfur trioxide content of 5-50 wt%, for example 5-10 wt%, 10-20 wt%, 20-30 wt%, 30-40 wt% or 40-50 wt%.

In one preferred embodiment, the step (1) and the step (2) are carried out with stirring.

In one preferred embodiment, the p-POD chopped fibre is prepared by a method comprising the following steps:

(I') preparing a p-POD fibre from the solution containing the p-POD polymer as described above; and

(II') cutting the p-POD fibre obtained in step (I') to obtain a p-POD chopped fibre.

In one preferred embodiment, the step (I') comprises:

(I'a) ejecting the solution containing p-POD polymer through pores of a spinneret to form solution threads;

(I'b) coagulating the solution threads into nascent fibres;

(I'c) packaging or post-treating the nascent fibres, for example, by washing with water, drying, stretching and the like.

It is further preferred that the step (I'a) further comprises subjecting the solution containing the p-POD polymer to filtration, which can be carried out by methods known to a person skilled in the art.

In one preferred embodiment, the fibrid is selected from the group consisting of polyamide fibrid, polyparaphenylene benzodioxazole fibrid and aromatic polyoxadiazole fibrid.

In one preferred embodiment, the polyamide fibrid is aromatic polyamide fibrid; more preferably, the aromatic polyamide fibrid is selected from the group consisting of poly(m-phenylene isophthalamide) fibrid and poly(p-phenylene terephthalamide) fibrid.

In one preferred embodiment, the aromatic polyoxadiazole fibrid is m-POD fibrid.

In one preferred embodiment, the m-POD fibrid has a specific surface area of 2-100 $m^2/g$, preferably 18-40 $m^2/g$, for example 18-20 $m^2/g$, 20-30 $m^2/g$ or 30-40 $m^2/g$.

In one more preferred embodiment, the m-POD fibrid has an original beating degree of 25-100°SR, preferably 50-80°SR, for example 50-60°SR, 60-80°SR, 65-75°SR or 70-80°SR.

In one preferred embodiment, the m-POD fibrid has a length of 0.1-7 mm and an aspect ratio of 50-1,000.

In one preferred embodiment, the m-POD fibrid has a thickness of 3-30 $\mu$m, more preferably 3-15 $\mu$m.

In one preferred embodiment, the m-POD fibrid is prepared from an m-POD polymer having an intrinsic viscosity at 25°C of 1.0-5.0 dL/g, for example 1.0-2.0 dL/g, 1.0-3.0 dL/g, 2.5-5.0 dL/g or 1.5-4.5 dL/g.

In one preferred embodiment, the m-POD polymer is prepared by a method comprising the following steps:

(1') combining a fuming sulfuric acid, an isophthalic acid and a hydrazine salt to form a reaction mixture, in which the hydrazine salt is added in an amount of 30-85%, for example 30-75%, 30-70%, 30-50%, 35-85%, 35-50%, 35.5-60%, 37.5-70%, 40-85%, 40-70%, 40-50%, 50-80%, 50-70%, 50-60% or 70-80%, relative to the total amount of the hydrazine salt to be added in the method; the fuming sulfuric acid is added in an amount of 30-95%, for example 30-87.5%, 30-70%, 30-50%, 30-36.8%, 36.8-87.5%, 40-95%, 40-50%, 50-90%, 50-70%, 60-70%, 70-90% or 80-95%, relative to the total amount of the fuming sulfuric acid to be added in the method; subjecting the reaction mixture to a reaction for 1-3 hours, for example 1-1.5 hours, 1-2 hours, 1.5-2 hours, 2-2.5 hours, 2-3 hours or 2.5-3 hours;

(2') adding the remaining hydrazine salt and the remaining fuming sulfuric acid, and continuing the reaction for 1-5

hours, for example 1-2 hours, 1-3 hours, 1-4 hours, 2-3 hours, 2-4 hours, 3-4 hours, 3-5 hours or 4-5 hours; wherein the total amounts of isophthalic acid, hydrazine salt and fuming sulfuric acid are in a molar ratio of 1: 0.4-1.5: 8-20, for example 1: 0.4-1: 8-10, 1: 0.8-1.5: 8-19, 1: 1-1.5: 10-15, 1: 0.5-1: 15-20 or 1: 0.8-1.3: 8-19.

In one preferred embodiment, the reaction in the step (1') is carried out at a temperature of 70-120°C, for example 70-80°C, 80-90°C, 90-100°C, 100-110°C or 110-120°C.

In one preferred embodiment, the reaction in the step (2') is carried out at a temperature of 100-160°C, for example 100-110°C, 110-120°C, 120-130°C, 130-140°C, 140-150°C or 150-160°C.

In one preferred embodiment, the hydrazine salt is selected from the group consisting of hydrazine sulfate and hydrazine chloride; preferably, the hydrazine salt is hydrazine sulfate.

In one preferred embodiment, the fuming sulfuric acid has a sulfur trioxide content of 5-50 wt%, for example 5-10 wt%, 10-20 wt%, 20-30 wt%, 30-40 wt% or 40-50 wt%.

In one preferred embodiment, the step (1') and the step (2') are carried out with stirring.

In one preferred embodiment, the m-POD fibrid is prepared by a method comprising the following steps:

i) mixing a solution containing an m-POD polymer with a precipitating agent to form a fibrid under shear; preferably, the shear is achieved by stirring;

preferably, the method further comprises the following steps:

ii) isolating the fibrid from the precipitating agent;
iii) washing the isolated fibrid.

Preferably, the solution containing the m-POD polymer is prepared by the method comprising the steps (1') and (2') as described above.

In one preferred embodiment, the precipitating agent is selected from the group consisting of water, 3-98 wt% sulfuric acid, 3-98 wt% phosphoric acid and a sulfate-containing aqueous solution, for example 1-16 wt% sodium sulfate aqueous solution or 1-5 wt% potassium sulfate aqueous solution.

In one preferred embodiment, the precipitating agent has a temperature of 20-70°C, preferably 30-60°C.

In one preferred embodiment, the solution containing m-POD polymer has a flow rate of 0-10 m/s, preferably 5-8 m/s.

In one preferred embodiment, the precipitating agent has a flow rate of 0-10 m/s, preferably 5-8 m/s.

In one preferred embodiment, the solution containing m-POD polymer has a flow rate same with the precipitating agent.

In one preferred embodiment, the precipitating agent and the solution containing m-POD polymer are in a mass ratio of 1-50: 1, preferably 20-50: 1.

In one preferred embodiment, the binder B is a thermoplastic resin fibre.

In one preferred embodiment, the thermoplastic resin is selected from the group consisting of polyester and polyamide; more preferably, the polyester is polyethylene terephthalate.

In one preferred embodiment, the thermoplastic resin fibre has a fineness of 1.5-2.0 D.

In one preferred embodiment, the thermoplastic resin fibre is a chopped fibre; more preferably, the chopped fibre has a length of 4-10 mm.

In one preferred embodiment, the binder B is a thermosetting resin fibre.

In one preferred embodiment, the thermosetting resin is selected from the group consisting of epoxy resin, phenolic resin, melamine resin, isocyanate resin and polyimide resin.

In one preferred embodiment, the fibre paper is prepared by a method comprising the following steps:

(I) subjecting the p-POD chopped fibre, the binder A and optionally the binder B to beating, impurity removal and dispersion to obtain an aqueous pulp;
(II) papermaking with the aqueous pulp to obtain a wet paper sheet, and then pressing and drying the wet paper sheet;
(III) hot-rolling the dried paper sheet;
(IV) calendering the hot-rolled paper sheet.

In one preferred embodiment, the p-POD chopped fibre is the p-POD chopped fibre as defined in any one of the preceding items.

In one more preferred embodiment, the binder A is the m-POD fibrid as defined in any one of the preceding items.

In one preferred embodiment, the method has one or more of the following characteristics:

(a) in the step (I), the p-POD chopped fibre, the binder A and the binder B are in a mass ratio of 30-70: 20-70: 0-10;
(b) in the step (I), the aqueous pulp has a total fibre concentration of 0.001-0.1 wt%;
(c) the step (I) further comprises a step of adding a dispersant;
(d) in the step (II), a wet papermaking process is used;
(e) in the step (II), the papermaking is carried out using an inclined wire former or a cylinder former, preferably a cylinder former; and
(f) in the step (III), hot-rolling is carried out using a dual temperature and dual pressure zone process.

In one preferred embodiment, the method has one, two, three, four, five or six of the above characteristics.

In one preferred embodiment, the dispersant in the characteristic (c) has a concentration of 0-2 wt% in the aqueous pulp. In one preferred embodiment, the dispersant in the characteristic (c) is one or more selected from the group consisting of surfactant (e.g. quaternary ammonium salt, fatty acid salt and sulfonate), water-soluble polymer (e.g., polyoxyethylene, polyacrylic acid or copolymer thereof, polyvinyl alcohol or derivative thereof and natural polymer's derivative), acid (e.g., hydrochloric acid, sulfuric acid and nitric acid), inorganic salt (e.g., sodium sulfate, sodium thiosulfate and sodium phosphate).

In one preferred embodiment, a first set of work zones in the dual temperature and dual pressure zone process has a roll linear pressure of 0-100 kg/cm, a roll surface temperature of 240-320°C, and a rolling speed of 1-30 m/min, and preferably, has a roll pressure of 20-400 kg/cm; and a second set of work zones has a roll linear pressure of 30-200 kg/cm, a roll surface temperature of 180-240°C, and a rolling speed of 1-30 m/min, and preferably, has a roll pressure of 20-400 kg/cm.

In another aspect, a method is provided for preparing a fibre paper, comprising use of the p-POD chopped fibre as defined in any one of the preceding items, more preferably, the method further comprises use of the m-POD fibrid as defined in any one of the preceding items.

Preferably, the method comprises the following steps:

(I) subjecting the p-POD chopped fibre, a binder A and optionally a binder B to beating, impurity removal and dispersion to obtain an aqueous pulp;
(II) papermaking with the aqueous pulp to obtain a wet paper sheet, and then pressing and drying the wet paper sheet;
(III) hot-rolling the dried paper sheet;
(IV) calendering the hot-rolled paper sheet.

In one preferred embodiment, the method has one or more of the following characteristics:

(a) in the step (I), the p-POD chopped fibre, the binder A and the binder B are in a mass ratio of 30-70: 20-70: 0-10;
(b) in the step (I), the aqueous pulp has a total fibre concentration of 0.001-0.1 wt%;
(c) the step (I) further comprises a step of adding a dispersant;
(d) in the step (II), a wet papermaking process is used;
(e) in the step (II), the papermaking is carried out using an inclined wire former or a cylinder former, preferably a cylinder former; and
(f) in the step (III), hot-rolling is carried out using a dual temperature and dual pressure zone process.

In one preferred embodiment, the method has one, two, three, four, five or six of the above characteristics.

In one preferred embodiment, the dispersant in the characteristic (c) has a concentration of 0-2 wt% in the aqueous pulp.In one preferred embodiment, the dispersant in the characteristic (c) is one or more selected from the group consisting of surfactant (e.g. quaternary ammonium salt, fatty acid salt and sulfonate), water-soluble polymer (e.g., polyoxyethylene, polyacrylic acid or copolymer thereof, polyvinyl alcohol or derivative thereof and natural polymer's derivative), acid (e.g., hydrochloric acid, sulfuric acid and nitric acid), inorganic salt (e.g., sodium sulfate, sodium thiosulfate and sodium phosphate).

In one preferred embodiment, a first set of work zones in the dual temperature and dual pressure zone process has a roll linear pressure of 0-100 kg/cm, a roll surface temperature of 240-320°C, and a rolling speed of 1-30 m/min, and preferably, has a roll pressure of 20-400 kg/cm; and a second set of work zones has a roll linear pressure of 30-200 kg/cm, a roll surface temperature of 180-240°C, and a rolling speed of 1-30 m/min, and preferably, has a roll pressure of 20-400 kg/cm.

In another aspect, a use of the fibre paper as an insulating paper is further provided. The fibre paper can be used for insulation of electrical equipment, for example, as a wire wrapping paper, a layer insulation, a phase insulation, an electrostatic ring, a brace, a pad and the like.

In another aspect, a use of the fibre paper for the preparation of an article is further provided.

In one preferred embodiment, the article is selected from the group consisting of an insulating material, a

structural material and an electronic device or component.

In one preferred embodiment, the insulating material is a composite insulating material, such as a composite insulating paper and a laminated insulating article. For example, the fibre paper as described above may be laminated and glued with, for example, a polyimide film, a polyester film and the like to obtain a composite insulating paper, or may be impregnated with an adhesive, followed by lamination and hot pressing to obtain a laminated insulating product.

In one preferred embodiment, the structural material is a sandwich material, such as a honeycomb sandwich material. For example, the fibre paper as described above may be used to form a panel and/or honeycomb core of a honeycomb sandwich material.

In one preferred embodiment, the electronic device or component is a printed circuit board. For example, the fibre paper is impregnated with a resin (e.g., epoxy resin, polyimide resin, polytetrafluoroethylene resin), and dried to form a Prepreg; according to the desired thickness, one or more Prepregs are compounded with a copper sheet under heating and pressurizing, to obtain a copper clad laminate, and then the copper clad laminate is made into various printed circuit boards according to different needs.

In another aspect, the present description further describes an article comprising one or more layers of the fibre paper.

In one preferred embodiment, the article is selected from the group consisting of an insulating material, a structural material and an electronic device or component.

In one preferred embodiment, the insulating material is a composite insulating material, such as a composite insulating paper and a laminated insulating article. For example, the fibre paper as described above may be laminated and glued with, for example, a polyimide film, a polyester film and the like to obtain a composite insulating paper, or may be impregnated with an adhesive, followed by lamination and hot pressing to obtain a laminated insulating product.

In one preferred embodiment, the structural material is a sandwich structural material, such as a honeycomb sandwich material. For example, a panel and/or honeycomb core of the honeycomb sandwich material comprises one or more layers of the fibre paper as described above.

In one preferred embodiment, the electronic device or component is a printed circuit board. For example, the fibre paper is impregnated with a resin (e.g., epoxy resin, polyimide resin, polytetrafluoroethylene resin), and dried to form a Prepreg; according to the desired thickness, one or more Prepregs are compounded with a copper sheet under heating and pressurizing, to obtain a copper clad laminate, and then the copper clad laminate is made into various printed circuit boards according to different needs.

(II) Fibre paper comprising a chopped fibre and m-POD fibrid

In one aspect, the present invention provides a fibre paper, which comprises a chopped fibre and an m-POD fibrid; wherein the chopped fibre is p-POD chopped fibre; wherein POD stands for aromatic polyoxadiazole.

In one preferred embodiment, the m-POD fibrid has a specific surface area of 2-100 $m^2/g$, preferably 18-40 $m^2/g$, for example 18-20 $m^2/g$, 20-30 $m^2/g$ or 30-40 $m^2/g$.

In one more preferred embodiment, the m-POD fibrid has an original beating degree of 25-100°SR, preferably 50-80°SR, for example 50-60°SR, 60-80°SR, 65-75°SR or 70-80°SR.

In one preferred embodiment, the m-POD fibrid has a length of 0.1-7 mm and an aspect ratio of 50-1,000.

In one preferred embodiment, the m-POD fibrid has a thickness of 3-30 μm, more preferably 3-15 μm.

In one particularly preferred embodiment, the m-POD fibrid has a length of 0.1-2 mm, an aspect ratio of 50-1,000, and a thickness of 6-15 μm.

In one preferred embodiment, the m-POD fibrid and the chopped fibre are in a mass ratio of 30-70: 30-70, for example 30-60: 40-70, 40-65: 35-60, 50-70: 30-50, for example 30: 70, 35: 65, 40: 60, 50: 50, 60: 40, 65: 35 or 70: 30.

In one preferred embodiment, the m-POD fibrid is prepared from an m-POD polymer having an intrinsic viscosity at 25°C of 1.0-5.0 dL/g, for example 1.0-2.0 dL/g, 1.0-3.0 dl/g, 4.0-5.0 dL/g or 2.5-5.0 dL/g, preferably 1.0-2.0 dL/g, more preferably 1.5-1.8 dL/g.

In one preferred embodiment, the m-POD polymer is prepared by a method comprising the following steps:

(1') combining a fuming sulfuric acid, an isophthalic acid and a hydrazine salt to form a reaction mixture, in which the hydrazine salt is added in an amount of 30-85%, for example 30-75%, 30-70%, 30-50%, 35-85%, 35-50%, 35.5-60%, 37.5-70%, 40-85%, 40-70%, 40-50%, 50-80%, 50-70%, 50-60% or 70-80%, relative to the total amount of the hydrazine salt to be added in the method; the fuming sulfuric acid is added in an amount of 30-95%, for example 30-87.5%, 30-70%, 30-50%, 30-36.8%, 36.8-87.5%, 40-95%, 40-50%, 50-90%, 50-70%, 60-70%, 70-90% or 80-95%, relative to the total amount of the fuming sulfuric acid to be added in the method; subjecting the reaction mixture to a reaction for 1-3 hours, for example 1-1.5 hours, 1-2 hours, 1.5-2 hours, 2-2.5 hours, 2-3 hours or 2.5-3 hours;

(2') adding the remaining hydrazine salt and the remaining fuming sulfuric acid, and continuing the reaction for 1-5

hours, for example 1-2 hours, 1-3 hours, 1-4 hours, 2-3 hours, 2-4 hours, 3-4 hours, 3-5 hours or 4-5 hours; wherein the total amounts of isophthalic acid, hydrazine salt and fuming sulfuric acid are in a molar ratio of 1: 0.4-1.5: 8-20, for example 1: 0.4-1: 8-10, 1: 0.8-1.5: 8-19, 1: 1-1.5: 10-15, 1: 0.5-1: 15-20, 1: 0.8-1.3: 8-19.

In one preferred embodiment, the reaction in the step (1') is carried out at a temperature of 70-120°C, for example 70-80°C, 80-90°C, 90-100°C, 100-110°C or 110-120°C.

In one preferred embodiment, the reaction in the step (2') is carried out at a temperature of 100-160°C, for example 100-110°C, 110-120°C, 120-130°C, 130-140°C, 140-150°C or 150-160°C.

In one preferred embodiment, the hydrazine salt is selected from the group consisting of hydrazine sulfate and hydrazine chloride; preferably, the hydrazine salt is hydrazine sulfate.

In one preferred embodiment, the fuming sulfuric acid has a sulfur trioxide content of 5-50 wt%, for example 5-10 wt%, 10-20 wt%, 20-30 wt%, 30-40 wt% or 40-50 wt%.

In one preferred embodiment, the step (1') and the step (2') are carried out with stirring.

In one preferred embodiment, the m-POD fibrid is prepared by a method comprising the following steps:

i) mixing a solution containing an m-POD polymer with a precipitating agent to form a fibrid under shear; preferably, the shear is achieved by stirring;

preferably, the method further comprises the following steps:

ii) isolating the fibrid from the precipitating agent; and/or
iii) washing the isolated fibrid.

Preferably, the solution containing m-POD polymer is prepared by the method comprising the steps (1') and (2') as described above.

In one preferred embodiment, the precipitating agent is selected from the group consisting of water, 3-98 wt% sulfuric acid, 3-98 wt% phosphoric acid and a sulfate-containing aqueous solution, for example 1-16 wt% sodium sulfate aqueous solution or 1-5 wt% potassium sulfate aqueous solution.

In one preferred embodiment, the precipitating agent has a temperature of 20-70°C, preferably 30-60°C.

In one preferred embodiment, the solution containing m-POD polymer has a flow rate of 0-10 m/s, preferably 5-8 m/s.

In one preferred embodiment, the precipitating agent has a flow rate of 0-10 m/s, preferably 5-8 m/s.

In one preferred embodiment, the solution containing m-POD polymer has a flow rate same with the precipitating agent. In one preferred embodiment, the precipitating agent and the solution containing m-POD polymer are in a mass ratio of 1-50: 1, preferably 20-50: 1.

In one preferred embodiment, the chopped fibre is selected from the group consisting of polyamide chopped fibre, aromatic polyoxadiazole chopped fibre, polyparaphenylene benzodioxazole chopped fibre and polyimide chopped fibre.

In one preferred embodiment, the polyamide is aromatic polyamide.

In one preferred embodiment, the aromatic polyamide is selected from the group consisting of poly(m-phenylene isophthalamide) and poly(p-phenylene terephthalamide).

In one preferred embodiment, the aromatic polyoxadiazole is p-POD.

In one preferred embodiment, the chopped fibre has a length of 2-20 mm; more preferably, the chopped fibre has a length of 2-8 mm.

In one preferred embodiment, the chopped fibre has a fineness of 0.1-5.0 D.

In one preferred embodiment, the p-POD chopped fibre has an initial decomposition temperature of higher than 500°C, for example higher than 505°C, higher than 508°C, higher than 510°C or higher than 515°C.

In one more preferred embodiment, the p-POD chopped fibre further has at least one of the following characteristics:

(a) the p-POD chopped fibre has a specific fracture strength of greater than 2.50 cN/dtex, for example greater than 2.60 cN/dtex, greater than 3.00 cN/dtex, greater than 3.30 cN/dtex or greater than 3.60 cN/dtex;
(b) the p-POD chopped fibre has a cyclization degree of greater than 80%, for example greater than 82%, greater than 85%, greater than 88%, greater than 90%, greater than 92%, greater than 95%, greater than 97%, greater than 98% or greater than 99%;
(c) the p-POD chopped fibre has a dispersibility of less than 10 fibres /100 g, for example less than 9 fibres /100 g, less than 8 fibres /100 g, less than 7 fibres /100 g, less than 6 fibres /100 g, less than 5 fibres /100 g, less than 4 fibres /100g or less than 3 fibres /100 g;

(d) the p-POD chopped fibre has a defect content of less than 5 mg/100 g, for example less than 4 mg/100 g, less than 3 mg/100 g, less than 2 mg/100 g or less than 1 mg/100 g.

In one preferred embodiment, the p-POD chopped fibre has one, two, three or four of the above characteristics.
In one preferred embodiment, the p-POD chopped fibre has a fineness of 0.1-5.0 D, for example 0.1-1.0 D, 0.1-4.0 D, 1.5-3.0 D or 3.0-5.0 D.
In one preferred embodiment, the p-POD chopped fibre has a length of 2-20 mm, for example 2-15 mm, 5-10 mm, 12-20 mm or 6-18 mm.
In one preferred embodiment, the p-POD chopped fibre has an aspect ratio of 100-30,000, for example 100-500, 500-1,000, 100-1,000, 1,000-5,000, 5,000-10,000, 10,000-15,000, 15,000-20,000, 20,000-25,000 or 25,000-30,000.
In one preferred embodiment, the p-POD chopped fibre has an initial decomposition temperature of higher than 500°C, and a cyclization degree of greater than 90%.
In one preferred embodiment, the p-POD chopped fibre has a specific fracture strength of greater than 3.30 cN/dtex and a dispersibility of less than 10 fibres /100 g.
In one preferred embodiment, the p-POD chopped fibre has a specific fracture strength of greater than 3.30 cN/dtex and a defect content of less than 5 mg/100 g.
In one preferred embodiment, the p-POD chopped fibre has a fineness of 0.1-5.0 D and a length of 2-20 mm.
In one preferred embodiment, the p-POD chopped fibre has a specific fracture strength of greater than 2.50 cN/dtex, a dispersibility of less than 10 fibres /100 g and a defect content of less than 5 mg/100 g.
In one preferred embodiment, the p-POD chopped fibre is prepared from a solution containing a p-POD polymer and having at least one of the following characteristics:

(a) the solution comprises a p-POD polymer and fuming sulfuric acid, wherein the p-POD polymer has an intrinsic viscosity of not less than 1.70 dL/g, for example not less than 1.73 dL/g, not less than 1.95 dL/g, not less than 2.02 dL/g or not less than 2.11 dL/g; and has an apparent viscosity of 50-120 Pa·S at a temperature of 100-160°C, for example, 50-80 Pa·S, 80-120 Pa·S, 70-120 Pa·S, 100-110 Pa·S or 110-120 Pa·S; preferably, the apparent viscosity is 70-120 Pa·S, for example 70-80 Pa·S, 80-90 Pa·S, 90-100 Pa·S, 100-110 Pa·S or 110-120 Pa·S;
(b) the solution does not comprise a capping agent, for example, the solution does not comprise benzoic acid or aniline; for example, the solution does not comprise benzoic acid; and
(c) the solution has a content of 15-50 μm particles of less than 100/mL, for example less than 90/mL, less than 80/mL, less than 70/mL, less than 60/mL, less than 50/mL, less than 40/mL, less than 30/mL, less than 20 /mL or less than 10/mL.

In one preferred embodiment, the solution containing the p-POD polymer has one, two or three of the above characteristics.
In one preferred embodiment, the solution comprises a p-POD polymer and fuming sulfuric acid, wherein the p-POD polymer has an intrinsic viscosity of not less than 1.70 dL/g, and has an apparent viscosity of 70-120 Pa·S at a temperature of 100-160°C, for example 70-80 Pa·S, 80-90 Pa·S, 90-100 Pa·S, 100-110 Pa·S or 110-120 Pa·S, such as 72 Pa·S, 82 Pa·S, 88 Pa·S, 92 Pa·S or 113 Pa·S.
In one preferred embodiment, the solution comprises a p-POD polymer and fuming sulfuric acid, and the solution does not comprise benzoic acid.
In one preferred embodiment, the solution comprises a p-POD polymer and fuming sulfuric acid, wherein the content of 15-50 μm particles is less than 30/mL.
In one preferred embodiment, the solution containing the p-POD polymer is prepared by a method comprising the following steps:

(1) combining a fuming sulfuric acid, a terephthalic acid and a hydrazine salt to form a reaction mixture, in which the hydrazine salt is added in an amount of 30-85%, for example 30-75%, 30-70%, 30-50%, 35-85%, 35-50%, 35.5-60%, 37.5-70%, 40-85%, 40-70%, 40-50%, 50-80%, 50-70%, 50-60% or 70-80%, relative to the total amount of the hydrazine salt to be added in the method; the fuming sulfuric acid is added in an amount of 30-95%, for example 30-87.5%, 30-70%, 30-50%, 30-36.8%, 36.8-87.5%, 40-95%, 40-50%, 50-90%, 50-70%, 60-70%, 70-90% or 80-95%, relative to the total amount of the fuming sulfuric acid to be added in the method; subjecting the reaction mixture to a reaction for 1-3 hours, for example 1-1.5 hours, 1-2 hours, 1.5-2 hours, 2-2.5 hours, 2-3 hours or 2.5-3 hours;
(2) adding the remaining hydrazine salt and the remaining fuming sulfuric acid, and continuing the reaction for 1-5 hours, for example 1-2 hours, 1-3 hours, 1-4 hours, 2-3 hours, 2-4 hours, 3-4 hours, 3-5 hours or 4-5 hours;
wherein the total amounts of terephthalic acid, hydrazine salt and fuming sulfuric acid are in a molar ratio of 1: 0.4-1.5: 8-20, for example 1: 0.4-1: 8-10, 1: 0.8-1.5: 8-19, 1: 1-1.5: 10-15, 1: 0.5-1: 15-20 or 1: 0.8-1.3: 8-19.

In one preferred embodiment, the reaction in the step (1) is carried out at a temperature of 70-120°C, for example 70-80°C, 80-90°C, 90-100°C, 100-110°C or 110-120°C.

In one preferred embodiment, the reaction in the step (2) is carried out at a temperature of 100-160°C, for example 100-110°C, 110-120°C, 120-130°C, 130-140°C, 140-150°C or 150-160°C.

In one preferred embodiment, the hydrazine salt is selected from the group consisting of hydrazine sulfate and hydrazine chloride; preferably, the hydrazine salt is hydrazine sulfate.

In one preferred embodiment, the fuming sulfuric acid has a sulfur trioxide content of 5-50 wt%, for example 5-10 wt%, 10-20 wt%, 20-30 wt%, 30-40 wt% or 40-50 wt%.

In one preferred embodiment, the step (1) and the step (2) are carried out with stirring.

In one preferred embodiment, the p-POD chopped fibre is prepared by a method comprising the following steps:

(I') preparing a p-POD fibre from the solution containing the p-POD polymer as described in Items (19)-(20); and
(II') cutting the p-POD fibre obtained in step (I') to obtain a p-POD chopped fibre.

In one preferred embodiment, the step (I') comprises:

(I'a) ejecting the solution containing p-POD polymer through pores of a spinneret to form solution threads;
(I'b) coagulating the solution threads into nascent fibres;
(I'c) packaging or post-treating the nascent fibres, for example, by washing with water, drying, stretching and the like.

It is further preferred that the step (I'a) further comprises subjecting the solution containing the p-POD polymer to filtration, which can be carried out by methods known to a person skilled in the art.

In one preferred embodiment, the fibre paper is prepared by a method comprising the following steps:

(I) subjecting the chopped fibre and the m-POD fibrid to beating, impurity removal and dispersion to obtain an aqueous pulp;
(II) papermaking with the aqueous pulp to obtain a wet paper sheet, and then pressing and drying the wet paper sheet;
(III) hot-rolling the dried paper sheet;
(IV) calendering the hot-rolled paper sheet.

In one preferred embodiment, the m-POD fibrid is the m-POD fibrid as defined in any one of the preceding items.

In one more preferred embodiment, the chopped fibre is the p-POD chopped fibre as defined in any one of the preceding items.

In one preferred embodiment, the method has one or more of the following characteristics:

(a) in the step (I), the m-POD fibrid and the chopped fibre is in a mass ratio of 30-70: 30-70;
(b) in the step (I), the aqueous pulp has a total fibre concentration of 0.001-0.1 wt%;
(c) the step (I) further comprises a step of adding a dispersant;
(d) in the step (II), a wet papermaking process is used;
(e) in the step (II), the papermaking is carried out using an inclined wire former or a cylinder former, preferably a cylinder former; and
(f) in the step (III), hot-rolling is carried out using a dual temperature and dual pressure zone process.

In one preferred embodiment, the method has one, two, three, four, five or six of the above characteristics.

In one preferred embodiment, the dispersant in the characteristic (c) has a concentration of 0-2 wt% in the aqueous pulp.

In one preferred embodiment, the dispersant in the characteristic (c) is one or more selected from the group consisting of surfactant (e.g. quaternary ammonium salt, fatty acid salt and sulfonate), water-soluble polymer (e.g., polyoxyethylene, polyacrylic acid or copolymer thereof, polyvinyl alcohol or derivative thereof and natural polymer's derivative), acid (e.g., hydrochloric acid, sulfuric acid and nitric acid), inorganic salt (e.g., sodium sulfate, sodium thiosulfate and sodium phosphate).

In one preferred embodiment, a first set of work zones in the dual temperature and dual pressure zone process has a roll linear pressure of 0-100 kg/cm, a roll surface temperature of 240-320°C, and a rolling speed of 1-30 m/min, and preferably, has a roll pressure of 20-400 kg/cm; and a second set of work zones has a roll linear pressure of 30-200 kg/cm, a roll surface temperature of 180-240°C, and a rolling speed of 1-30 m/min, and preferably, has a roll pressure of 20-400 kg/cm.

In another aspect, the present invention provides a method for preparing a fibre paper, comprising use of the m-POD fibrid as defined in any one of the preceding items, preferably, the method further comprises use of the p-POD

chopped fibre as defined in any of the preceding items.

In one preferred embodiment, the method comprises the following steps:

(I) subjecting the chopped fibre and the m-POD fibrid to beating, impurity removal and dispersion to obtain an aqueous pulp;
(II) papermaking with the aqueous pulp to obtain a wet paper sheet, and then pressing and drying the wet paper sheet;
(III) hot-rolling the dried paper sheet;
(IV) calendering the hot-rolled paper sheet.

In one preferred embodiment, the method has one or more of the following characteristics:

(a) in the step (I), the m-POD fibrid and the chopped fibre are in a mass ratio of 30-70: 30-70;
(b) in the step (I), the aqueous pulp has a total fibre concentration of 0.001-0.1 wt%;
(c) the step (I) further comprises a step of adding a dispersant;
(d) in the step (II), a wet papermaking process is used;
(e) in the step (II), the papermaking is carried out using an inclined wire former or a cylinder former, preferably a cylinder former; and
(f) in the step (III), hot-rolling is carried out using adual temperature and dual pressure zone process.

In one preferred embodiment, the method has one, two, three, four, five or six of the above characteristics.

In one preferred embodiment, the dispersant in the characteristic (c) has a concentration of 0-2 wt% in the aqueous pulp.

In one preferred embodiment, the dispersant in the characteristic (c) is one or more selected from the group consisting of surfactant (e.g. quaternary ammonium salt, fatty acid salt and sulfonate), water-soluble polymer (e.g., polyoxyethylene, polyacrylic acid or copolymer thereof, polyvinyl alcohol or derivative thereof and natural polymer's derivative), acid (e.g., hydrochloric acid, sulfuric acid and nitric acid), inorganic salt (e.g., sodium sulfate, sodium thiosulfate and sodium phosphate).

In one preferred embodiment, a first set of work zones in the dual temperature and dual pressure zone process has a roll linear pressure of 0-100 kg/cm, a roll surface temperature of 240-320°C, and a rolling speed of 1-30 m/min, and preferably, has a roll pressure of 20-400 kg/cm; and a second set of work zones has a roll linear pressure of 30-200 kg/cm, a roll surface temperature of 180-240°C, and a rolling speed of 1-30 m/min, and preferably, has a roll pressure of 20-400 kg/cm.

In another aspect, a use of the fibre paper of the present invention as an insulating paper is further provided. The fibre paper of the present invention can be used for insulation of electrical equipment, for example, as a wire wrapping paper, a layer insulation, a phase insulation, an electrostatic ring, a brace, a pad and the like.

In another aspect, a use of the fibre paper of the present invention for the preparation of an article is further provided.

In one preferred embodiment, the article is selected from the group consisting of an insulating material, a structural material and an electronic device or component.

In one preferred embodiment, the insulating material is a composite insulating material, such as a composite insulating paper and a laminated insulating article. For example, the fibre paper as described above may be laminated and glued with, for example, a polyimide film, a polyester film or the like to obtain a composite insulating paper, or may be impregnated with an adhesive, followed by lamination and hot pressing to obtain a laminated insulating product.

In one preferred embodiment, the structural material is a sandwich structural material, such as a honeycomb sandwich material. For example, the fibre paper as described above may be used to form a panel and/or honeycomb core of a honeycomb sandwich material.

In one preferred embodiment, the electronic device or component is a printed circuit board. For example, the fibre paper is impregnated with a resin (e.g., epoxy resin, polyimide resin, polytetrafluoroethylene resin), and dried to form a Prepreg; according to the desired thickness, one or more Prepregs are compounded with a copper sheet under heating and pressurizing, to obtain a copper clad laminate, and then the copper clad laminate is made into various printed circuit boards according to different needs.

In another aspect, the present invention further provides an article comprising one or more layers of the fibre paper of the present invention.

In one preferred embodiment, the article is selected from the group consisting of an insulating material, a structural material and an electronic device or component.

In one preferred embodiment, the insulating material is a composite insulating material, such as a composite insulating paper and a laminated insulating article. For example, the fibre paper as described above may be laminated and glued with, for example, a polyimide film, a polyester film or the like to obtain a composite insulating paper, or may

be impregnated with an adhesive, followed by lamination and hot pressing to obtain a laminated insulating product.

In one preferred embodiment, the structural material is a sandwich structural material, such as a honeycomb sandwich material. For example, a panel and/or honeycomb core of the honeycomb sandwich material comprises one or more layers of the fibre paper as described above.

In one preferred embodiment, the electronic device or component is a printed circuit board. For example, the fibre paper is impregnated with a resin (e.g., epoxy resin, polyimide resin, polytetrafluoroethylene resin), and dried to form a Prepreg; according to the desired thickness, one or more Prepregs are compounded with a copper sheet under heating and pressurizing, to obtain a copper clad laminate, and then the copper clad laminate is made into various printed circuit boards according to different needs.

Advantageous effects of the present invention

The fibre paper of the present invention containing p-POD chopped fibre and/or m-POD fibrid has good uniformity, mechanical strength, electrical insulation and heat resistance, and can satisfy high temperature, high precision, high humidity, lightweight and other product requirements under strict work conditions.

The fibre paper of the present invention containing p-POD chopped fibre and/or m-POD fibrid has very excellent uniformity, dielectric strength and mechanical strength. In particular, when the p-POD chopped fibre has specific property (e.g., specific mechanical property, dispersibility, purity and/or thermal stability), the resulting fibre paper has a long-term use temperature of up to 240°C, at this temperature, the time-span of electrical thermal aging and the time-span of mechanical thermal aging both are greater than 22 years, and at the same time, the product has very good uniformity, dielectric strength and mechanical strength.

The fibre paper of the present invention can be used as an insulating material, and can remarkably increase the high temperature insulation grade of products. It can be used for a long term in occasions of grade C or above, and can also be used for the preparation of a composite insulating material. It can also be processed into high performance honeycomb sandwich materials and printed circuit board materials, widely used in electronic, electrical, transportation, military, aerospace and other fields.

Description of the figures

Fig. 1 shows the preparation of fibre paper in Example 7, comprising the following steps: beating, impurity removal, dispersing, papermaking, pressing, drying, hot rolling and calendering.

Mode of carrying out the invention

While the embodiments of the present invention are described in detail with reference to the following examples, it will be understood by a person skilled in the art that the following examples are only intended to be illustrative of the present invention and should not be construed as limiting the scope of the present invention. All operations in the examples, for which the specific conditions are not specified, are carried out in accordance with conventional conditions or the conditions recommended by the manufacturers. All reagents or instruments in the examples, for which the manufacturers are not specified, are conventional products that are commercially available.

Example 1. Preparation of p-POD solution and m-POD solution

(1) Main raw materials:

Fuming sulfuric acid (sulfur trioxide content of 5-50 wt%), terephthalic acid (PTA), isophthalic acid (IPA), hydrazine sulfate (HS).

(2) Polymerization equipment:

Reactor: with program controlled heating, heating mode being oil heating, electric heating or steam heating, high-power torque stirrer (power: 10-30 KV, adjustable speed: 60-120 rpm), on-line viscometer (range: 0- 300000 Pa·S), and absorption device for sulfur trioxide exhaust.

(3) Preparation process

The feed amounts in the following experiments are all calculated based on molar equivalents (i.e., parts), and the molar equivalent of fuming sulfuric acid is calculated by the molar equivalent of sulfur trioxide.

Preparation of p-POD solution 1

Step (1): 7 parts of fuming sulfuric acid were added to the reactor through a metering device, and 1 part of PTA and 0.7 part of HS were mixed homogeneously and then added to the reactor. After stirring well, the temperature was programmed to 100°C, and the reaction was carried out with a stirring speed of 100 rpm at 100°C for 2 hours.

Step (2): the exhaust gas absorption device was opened, while 3 parts of fuming sulfuric acid and 0.3 parts of HS were added to continue the reaction, and the temperature was programmed to 120°C. The reaction was carried out at 120°C for 2 hours, and then stirring was stopped, and a p-POD solution 1 was obtained. The apparent viscosity of the solution measured at this time was 113 Pa·S. The final intrinsic viscosity of the polymer was measured using an Ubbelohde viscometer, and the result was 2.11 dL/g. After completion of the reaction, unreacted sulfur trioxide was removed by an exhaust gas treatment device provided with the reactor.

Preparation of p-POD solutions 2-5

The raw materials used were PTA, HS and fuming sulfuric acid, and the feed amounts were listed in Table 1. The reaction time, reaction temperature and stirring speed were the same as those used for the preparation of the p-POD solution 1.

Table 1 Feed amounts of reactants for the preparation of p-POD solution

| p-POD solution | Feed amount of PTA | Feed amount of HS | | Feed amount of fuming sulfuric acid | |
|---|---|---|---|---|---|
| | | step (1) | step (2) | step (1) | step (2) |
| 1 | 1 | 0.7 | 0.3 | 7 | 3 |
| 2 | 1 | 0.5 | 0.5 | 5 | 5 |
| 3 | 1 | 0.5 | 0.8 | 7 | 1 |
| 4 | 1 | 0.3 | 0.5 | 7 | 12 |
| 5 | 1 | 0.7 | 0.3 | 7 | 8 |

Preparation of p-POD solution 6 (Comparative Example)

10 parts of fuming sulfuric acid were added to the reactor through a metering device, and 1 part of PTA and 1 part of HS were mixed homogeneously and then added to the reactor. After stirring well, the temperature was programmed to 100°C, and the reaction was carried out with a stirring speed of 100 rpm for 2 hours. Thereafter, the temperature was programmed to 120°C. After the reaction was continued for 2 hours, 0.05 part of benzoic acid as capping agent was added.

Preparation of p-POD solution 7 (Comparative Example)

15 parts of fuming sulfuric acid were added to the reactor through a metering device, and 1 part of PTA and 1 part of HS were mixed homogeneously and then added to the reactor. After stirring well, the temperature was programmed to 100°C, and the reaction was carried out with a stirring speed of 100 rpm for 2 hours. Thereafter, the temperature was programmed to 120°C. After the reaction was continued for 2 hours, 0.05 part of benzoic acid as capping agent was added.

Preparation of m-POD solution 1

Step (1): 7 parts of fuming sulfuric acid were added to the reactor through a metering device, and 1 part of IPA and 0.7 part of HS were mixed homogeneously and then added to the reactor. After stirring well, the temperature was programmed to 100°C, and the reaction was carried out with a stirring speed of 100 rpm at 100°C for 2 hours.

Step (2): the exhaust gas absorption device was opened, while 3 parts of fuming sulfuric acid and 0.3 parts of HS were added to continue the reaction, and the temperature was programmed to 120°C. The reaction was carried out at 120°C for 2 hours, and then the stirring was stopped, and an m-POD solution 1 was obtained. After completion of the reaction, unreacted sulfur trioxide was removed by an exhaust gas treatment device provided with the reactor.

Preparation of m-POD solutions 2 and 3

The raw materials used were IPA, HS and fuming sulfuric acid, the reaction was carried out according to the feed amounts listed in Table 2. The reaction time, reaction temperature and stirring speed were the same as those used for the preparation of the m-POD solution 1.

Table 2 Feed amounts of reactants for the preparation of m-POD solution

| m-POD solution | Feed amount of IPA | Feed amount of HS | | Feed amount of fuming sulfuric acid | |
|---|---|---|---|---|---|
| | | step (1) | step (2) | step (1) | step (2) |
| 1 | 1 | 0.7 | 0.3 | 7 | 3 |
| 2 | 1 | 0.5 | 0.3 | 5 | 3 |
| 3 | 1 | 1 | 0.5 | 10 | 5 |

Example 2. Characterization of the p-POD solutions and the m-POD solutions

(1) Viscosity measurement

Apparent viscosity: After completion of the reaction, the final apparent viscosity of the polymer solution was measured by an on-line viscometer. The results were shown in Table 3.

Intrinsic viscosity: The polymer solution was dropped into water for coagulation and precipitation, the resulting polymer was filtered, washed with a large amount of water several times till neutral, and dried at 100°C till the weight of the polymer was constant. 0.1 g of the purified polymer was dissolved in 20 mL of concentrated sulfuric acid, and the intrinsic viscosity was measured at 25°C using an Ubbelohde viscometer. The results were shown in Table 3.

Table 3 Results of viscosity measurement

| Sample | Final apparent viscosity(Pa·S) | Final intrinsic viscosity(dL/g) |
|---|---|---|
| p-POD solution1 | 113 | 2.11 |
| p-POD solution2 | 92 | 1.95 |
| p-POD solution3 | 88 | 1.73 |
| p-POD solution4 | 72 | 2.02 |
| p-POD solution5 | 82 | 2.11 |
| p-POD solution6 | 245 | 2.21 |
| p-POD solution7 | 213 | 2.08 |
| m-POD solution1 | - | 1.80 |

As could be seen from Table 3, the p-POD solutions 1-5 had final apparent viscosities of 70-120 Pa·S and intrinsic viscosities of greater than 1.70 dL/g. The intrinsic viscosities of the p-POD solutions 1, 4 and 5 were 2.0-2.2 dL/g, which were close to the intrinsic viscosities of the Comparative Examples (p-POD solutions 6 and 7), indicating that the p-POD polymers contained in the solutions have molecular weights close to each other. However, the final apparent viscosities of the p-POD solutions 1, 4 and 5 were much lower than the final apparent viscosities of the p-POD solutions 6 and 7. This indicated that, in the case of ensuring a certain molecular weight of the p-POD polymer, a p-POD solution having a lower apparent viscosity and better fluidity, which was more conducive to spinning, could be obtained by the preparation method of the present invention.

(2) Determination of benzoic acid content:

The p-POD solutions 1-5 were respectively dropped into water to make the polymer precipitate. The polymer was washed with a large amount of water till neutral. The polymer was dissolved in 98% concentrated sulfuric acid, the absorbance at 225 nm was measured using an ultraviolet spectrophotometer, and benzoic acid content was calculated by comparing the absorbance with a standard sample. The results showed that none of the p-POD solutions 1-5 contained

benzoic acid. The p-POD solution 7 was determined to have a benzoic acid content of 0.102% according to the same treatment method and test conditions.

(3) Determination of particle content and size:

The p-POD solutions 4, 5 and 7 were filtered, and particulate impurities in the solutions were determined using a ZL-B oily particle analyzer. In both the p-POD solutions 4 and 5, the content of 15-50 μm particles was 22/mL. In the p-POD solution 7, the content of 15-50 μm particles was 356/mL. The results showed that the p-POD solutions having a lower apparent viscosity obtained in the present invention had improved fluidity and filterability, and could reduce the phenomena of plugging, deformation and perforation of the filter screen, and improve the filtration efficiency, so that the content of particulate impurities in the polymer solution was effectively reduced.

The above results showed that p-POD solutions having a lower apparent viscosity were obtained, with better workability, and a lower content of impurities (including the remaining capping agent such as benzoic acid and particulate matter), which was more conducive to spinning.

Example 3. Preparation of p-POD fibres

(1) Raw material: filtered p-POD solutions 1-7

(2) Preparation process

After being defoamed, the p-POD solution 1 was conveyed to a spinning manifold through a gear pump (conveying pressure: about 0.5 MPa), introduced into a spinning pack through a distribution pipe and a metering device, and ejected through a spinneret to form solution threads, wherein the speed was 20 m/min, the spinneret included 10,000 holes, and the hole diameter was 0.1 mm.

The solution threads entered a sulfuric acid coagulation bath (sulfuric acid content: 50 wt%, 50°C), and the flow rate of the coagulation bath was 20 $m^3$/h. The resulting nascent fibres were then subjected to 4-fold stretching in a draft roll, followed by washing with water and drying at 120°C till neutral, to obtain p-POD fibre 1.

p-POD fibres 2-7 were prepared by using the p-POD solutions 2-7 according to the above process, respectively.

Example 4. Test of p-POD fibres

(1) Fineness

The fineness of fibres was measured using a YG002C fibre fineness analyzer (Shanghai Precision and Scientific Instrument Co., Ltd.). The fineness of all the p-POD fibres 1-7 was 0.1-5.0 D.

(2) Mechanical property

The mechanical property of fibres were characterized by specific fracture strength. The specific fracture strength of fibres was tested using an automatic fibre strength tester (electronic universal testing machine, tensile testing machine 3360 series, Instron).

(3) Dispersibility

The dispersibility of fibres was characterized by the number of undispersed fibres in 100 g fibres. The dispersibility of fibres was measured using a photograph observation method.

(4) Purity

The purity of fibres was characterized by defect content. The lower the defect content was, the higher the purity of fibres would be. The defect content was determined using a YG041 cotton impurity analyzer according to National Standard GB/T 14339-2008.

(5) Thermal stability

Initial decomposition temperature: initial decomposition temperature of fibres was determined in a nitrogen atmosphere using a Q600 thermal analyzer (TA, USA). The temperature range was 50°C-800°C and the heating rate

was 10°C/min.

Cyclization degree: after milling fibres into powder, the weight loss of a sample was determined at 200-400°C using TGA analysis method, and the cyclization degree (CD) was calculated according to the following formula:

$$CD = 1 - \frac{144 \cdot (W_{H_2O})}{18 - 18 \cdot (W_{H_2O})},$$

wherein $W_{H2O}$ was the weight loss of polymer at 200-400°C.

The results from property tests of p-POD fibres were shown in Table 4 and Table 5.

Table 4 Results from mechanical property, dispersibility and purity tests of p-POD fibres

| p-POD fibres | Specific fracture strength (CN/dtex) | Dispersibility (fibres/100 g) | Defect content (mg/100 g) |
|---|---|---|---|
| 1 | 3.32 | 4 | 0 |
| 2 | 3.42 | 2 | 1 |
| 3 | 3.51 | 3 | 0 |
| 4 | 3.63 | 2 | 0 |
| 5 | 3.32 | 5 | 0 |
| 6 | 3.22 | 23 | 8 |
| 7 | 2.73 | 34 | 12 |

As could be seen from Table 4, the p-POD fibres 1-5 all had a specific fracture strength of greater than 3.30 CN/dtex, a dispersibility of less than 10/100 g, a defect content of less than 5 mg/100g, exhibiting good mechanical property, dispersibility and purity. In contrast, Comparative Examples (p-POD fibres 6 and 7) had a lower specific fracture strength, and worse dispersibility and purity. The above results showed that, as compared with the p-POD fibres obtained in the prior art, the p-POD fibres of the present invention had more uniform and compact structure, less defects inside the fibres, and higher fibre strength, and also had excellent dispersibility and purity.

Table 5 Results from thermal stability test of p-POD fibres

| p-POD fibres | Initial decomposition temperature (°C) | Cyclization degree (%) |
|---|---|---|
| 1 | 508.3 | 90.5 |
| 4 | 511.1 | 92.5 |
| 6 | 505.8 | 70.8 |

As could be seen from Table 5, as compared with the p-POD fibres (for example, the p-POD fibre 6) obtained in the prior art, the p-POD fibres of the present invention had higher initial decomposition temperature and cyclization degree. The above results showed that the p-POD fibres obtained in the present invention had good thermal stability.

Example 5. Preparation of m-POD precipitation fibres

Raw materials: m-POD solutions 1-3
Equipment: Closed synthetic fibre paper pulp settling machine disclosed in CN201020010015.3

Preparation of m-POD fibrid 1

A sulfuric acid at a temperature of 60°C in a concentration of 25 wt% was prepared as a precipitating agent. The m-POD solution 1 and the precipitating agent, each in a flow rate of 5 m/s, were introduced into a precipitation machine, in a flow ratio of 50: 1. The speed of the precipitation machine was 10,000 rpm. Fibrids flowed out of the precipitation machine and entered a storage tank where the fibrids stayed for 5 hours. The fibrids were subjected to preliminary separation and extrusion treatment using a pressure separation equipment with a roll, and the precipitating agent was recovered. The fibrids, which had been subjected to preliminary separation and extrusion treatment, were washed to neutral using a multiple countercurrent washing method, to obtain m-POD fibrid 1.

Preparation of m-POD fibrid2

A sulfuric acid at a temperature of 30°C in a concentration of 60 wt% was prepared as a precipitating agent. The m-POD solution 2 and the precipitating agent, each in a flow rate of 10 m/s, were introduced into a precipitation machine, in a flow ratio of 20: 1. The speed of the precipitation machine was 10,000 rpm. Fibrids flowed out of the precipitation machine and entered a storage tank where the fibrids stayed for 2 hours. The precipitation fibres were subjected to preliminary separation and extrusion treatment using a pressure separation equipment with a roll, and the precipitating agent was recovered. Thefibrids, which had been subjected to preliminary separation and extrusion treatment, were washed to neutral using a multiple countercurrent washing method, to obtain m-POD fibrid 2.

Preparation of m-POD fibrid 3

Using m-POD solution 3 as raw material, m-POD fibrid 3 was prepared according to the same method for preparing m-POD fibrid 1.

Example 6. Test of m-POD fibrids

According to the instructions given in the instrument manual, the m-POD fibrids 1-3 were tested as follows:

(1) The specific surface area of the m-POD fibrid s was determined using a nitrogen adsorption surface area tester (V-Sorb 2800P, Gold APP Instruments);
(2) The original beating degree of the m-POD fibrid s was determined using a pulp beating degree tester (Schopper-Riegler's tester) (HK, Hengke Instruments)
(3) The initial decomposition temperature and glass transition temperature of the m-POD fibrids were determined in $N_2$ using a Q600 thermal analyzer (TA, USA).

Commercially available aramid fibrid (Shenzhen Cansen Science and Technology Co., Ltd.) was tested using the same method.
The results were shown in Table 6.

Table 6 Results from test of fibrids

| Fibrids | Specific surface area ($m^2$/g) | Original beating degree (°SR) | Glass transition temperature (°C) | Initial decomposition temperature(°C) |
|---|---|---|---|---|
| m-POD fibrid 1 | 28 | 60 | 350 | 470 |
| m-POD fibrid 2 | 18 | 50 | 350 | 470 |
| m-POD fibrid 3 | 20 | 60 | 350 | 470 |
| aramid fibrid | 11 | 33 | 270 | 410 |

As could be seen from Table 6, as compared with aramid fibrid, the m-POD fibrid of the present invention had higher glass transition temperature and initial decomposition temperature, indicating that they had better high temperature resistance. In addition, the m-POD fibrid of the present invention had higher specific surface area and original beating degree, and was very suitable for papermaking.

Example 7. Preparation of fibre paper

(1) Raw materials:

p-POD fibres 1-7 were respectively cut: the fibres were allowed to enter a fibre cutter at a speed of 80 m/min to obtain p-POD chopped fibres 1-7, with a length of 2-20 mm and an aspect ratio of 100-1,000;
m-POD fibrids 1-3;
poly(m-phenylene isophthalamide) chopped fibre, with a length of 2-8 mm, whose filaments were prepared according

to the method disclosed in CN200910259778.3;
poly(m-phenylene isophthalamide) fibrid, prepared according to the method disclosed in CN200610069115.1;
p-POD chopped fibre 8, with a length of 2-8 mm, whose filaments were prepared according to the method disclosed in CN200810177301.6;
poly(p-phenylene terephthalamide) chopped fibre, with a length of 2-8 mm, whose filamentswere prepared according to the method disclosed in CN201110133796;

(2) Preparation method, as shown in Fig. 1:

(I) beating, impurity removal, dispersion: an aqueous dispersion of the chopped fibre was fluffed at a concentration of 1 wt% in a hydraulic fluffing equipment to obtain a pulp A, which was then subjected to impurity removal twice in a conical impurity separator. The fibrid was fluffed at a concentration of 2 wt% in a pulper, beaten in a beater while controlling the mechanical beating degree at about 50-80°SR, and then subjected to impurity removal twice in a conical impurity separator, to obtain a pulp B, in which polyoxyethylene (PEO) was added. The pulp A and the pulp B were uniformly mixed in certain proportion in a batching tank to form an aqueous pulp, in which the concentration of PEO was 0.1 wt%.
The pressure head for flow onto wire of the pulp was adjusted in a pulp stabilizing box, and in a flow box the pulp was evenly distributed onto a papermaking forming wire, at a concentration of 0.06 wt%, while excess slurry overflowing to a machine pit
(II) papermaking, pressing and drying: while the pulp running along the forming wire, water was drained from the pulp with the aid of a couch roll. After removed from the wire, the resulting wet paper sheet was pressed to further remove water, and dried in a paper dryer.
(III) hot-rolling: the paper sheet was hot-rolled using a dual temperature and dual pressure zone process, wherein, in a first set of work zones, the roll linear pressure was 25 kg/cm, the roll surface temperature was 310°C (Papermaking Examples 1-10) or 300°C (Papermaking Examples 10-18), the rolling speed was 15 m/min; in a second set of work zones, the roll linear pressure was 100 kg/cm, the roll surface temperature was 220°C, the rolling speed was 15 m/min.
(IV) Calendering: the hot-rolled paper was finished with a calender, at a temperature of 180°C (Papermaking Example 1-10) or 200°C (Papermaking Examples 10-18), to obtain a fibre paper.

Fibre paper 1
Raw materials: p-POD chopped fibre 3, and poly(m-phenylene isophthalamide) fibrid, in mass percentage ratio of 50%: 50%.
Fibre paper 2
Raw materials: p-POD chopped fibre 5, and poly(m-phenylene isophthalamide) fibrid, in mass percentage ratio of 70%: 30%.
Fibre paper 3
Raw materials: p-POD chopped fibre 1 and poly(m-phenylene isophthalamide) fibrid, in mass percentage ratio of 60%: 40%.
Fibre paper 4
Raw materials: p-POD chopped fibre 2, and poly(m-phenylene isophthalamide) fibrid, in mass percentage ratio of 40%: 60%.
Fibre paper 5
Raw materials: p-POD chopped fibre 4, and poly(m-phenylene isophthalamide) fibrid, in mass percentage ratio of 50%: 50%.
Fibre paper 6
Raw materials: p-POD chopped fibre 4, and m-POD fibrid 1, in mass percentage ratio of 50%: 50%.
Fibre paper 7
Raw materials: p-POD chopped fibre 4, and m-POD fibrid 1, in mass percentage ratio of 40%: 60%.
Fibre paper 8
Raw materials: poly(m-phenylene isophthalamide) chopped fibre, and m-POD fibrid 1, in mass percentage ratio of 50%: 50%.
Fibre paper 9
Raw materials: p-POD chopped fibre 6, and m-POD fibrid 1, in mass percentage ratio of 40%: 60%.
Fibre paper 10
Raw materials: p-POD chopped fibre 7, and m-POD fibrid 1, in mass percentage ratio of 40%: 60%.
Fibre paper 11

Raw materials: poly(m-phenylene isophthalamide) chopped fibre, and m-POD fibrid 3, in mass percentage ratio of 50%: 50%.

Fibre paper 12

Raw materials: p-POD chopped fibre 7, and m-POD fibrid 3, in mass percentage ratio of 60%: 40%.

Fibre paper 13

Raw materials: p-POD chopped fibre 1, and m-POD fibrid 2, in mass percentage ratio of 65%: 35%.

Fibre paper 14

Raw materials: p-POD chopped fibre 4, and m-POD fibrid 3, in mass percentage ratio of 65%: 35%.

Fibre paper 15

Raw materials: p-POD chopped fibre 3, and m-POD fibrid 3, in mass percentage ratio of 60%: 40%.

Fibre paper 16

Raw materials: p-POD chopped fibre 4, and m-POD fibrid 3, in mass percentage ratio of 50%: 50%.

Fibre paper 17

Raw materials: poly(p-phenylene terephthalamide) chopped fibre, and m-POD fibrid 3, in mass percentage ratio of 70%: 30%.

Fibre paper 18

Raw materials: p-POD chopped fibre 4, poly(m-phenylene isophthalamide) fibrid, in mass percentage ratio of 70%: 30%.

Example 8. Property test of fibre paper

(1) Determination of grammage and thickness

The grammage and thickness of fibre paper were determined using a grammage measuring instrument HK-208 (Hengke Instruments) and a thickness measuring instrument HK-210 (Hengke Instruments), respectively.

(2) Test of mechanical properties

The elongation was tested using a tensile testing machine DCP-KZ300 (Sichuan Changjiang Papermaking Instruments). The tear strength was tested according to Tappi T419 OM standard using a DCP-SLY1000 Elymais Astoria Tear Tester (Sichuan Changjiang Papermaking Instruments).

(3) Test of insulating property

The insulating property of fibre paper was characterized by dielectric strength. The dielectric strength of fibre paper was tested according to GB/T 1408.1-2006 using a dielectric strength tester of QS37 (Beijing CATIC Instrument and Equipment Co., Ltd.).

The results of the above tests were shown in Tables 7-24.

Table 7 Test data of fibre paper 1

| Gram mage | Thick ness | Tight ness | Tensile strength | | Elongation | | Tear strength | | Diele ctric streng th |
|---|---|---|---|---|---|---|---|---|---|
| g/m$^2$ | mm | g/cm$^3$ | KN/m | | % | | mN | | kv/m m |
| | | | Longitu dinal | Transv erse | Longitu dinal | Transv erse | Longitu dinal | Transv erse | |
| 43 | 0.053 | 0.81 | 3.12 | 2.99 | 3.25 | 3.01 | 1666 | 1693 | 20 |

Table 8 Test data of fibre paper 2

| Gram mage | Thick ness | Tight ness | Tensile strength | | Elongation | | Tear strength | | Diele ctric streng th |
|---|---|---|---|---|---|---|---|---|---|
| $g/m^2$ | mm | $g/cm^3$ | KN/m | | % | | mN | | kv/m m |
| | | | Longitu dinal | Transv erse | Longitu dinal | Transv erse | Longitu dinal | Transv erse | |
| 38.3 | 0.039 | 0.98 | 3.13 | 2.86 | 5.16 | 6.18 | 1870 | 1976 | 19.9 |

Table 9 Test data of fibre paper 3

| Gram mage | Thick ness | Tight ness | Tensile strength | | Elongation | | Tear strength | | Diele ctric streng th |
|---|---|---|---|---|---|---|---|---|---|
| $g/m^2$ | mm | $g/cm^3$ | KN/m | | % | | mN | | kv/m m |
| | | | Longitu dinal | Transv erse | Longitu dinal | Transv erse | Longitu dinal | Transv erse | |
| 48.5 | 0.055 | 0.88 | 3.78 | 2.66 | 5.77 | 6.08 | 1998 | 2023 | 21.1 |

Table 10 Test data of fibre paper 4

| Gram mage | Thick ness | Tight ness | Tensile strength | | Elongation | | Tear strength | | Diele ctric streng th |
|---|---|---|---|---|---|---|---|---|---|
| $g/m^2$ | mm | $g/cm^3$ | KN/m | | % | | mN | | kv/m m |
| | | | Longitu dinal | Transv erse | Longitu dinal | Transv erse | Longitu dinal | Transv erse | |
| 35.2 | 0.050 | 0.70 | 3.82 | 2.53 | 4.97 | 4.43 | 998 | 978 | 19.3 |

Table 11 Test data of fibre paper 5

| Gram mage | Thick ness | Tight ness | Tensile strength | | Elongation | | Tear strength | | Diele ctric streng th |
|---|---|---|---|---|---|---|---|---|---|
| $g/m^2$ | mm | $g/cm^3$ | KN/m | | % | | mN | | kv/m m |
| | | | Longitu dinal | Transv erse | Longitu dinal | Transv erse | Longitu dinal | Transv erse | |
| 38 | 0.045 | 0.84 | 4.25 | 3.83 | 2.19 | 2.12 | 2119 | 2012 | 21.5 |

Table 12 Test data of fibre paper 6

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 38 | 0.048 | 0.79 | 4.93 | 4.04 | 2.219 | 2.34 | 1999 | 2021 | 26.5 |

Table 13 Test data of fibre paper 7

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 39 | 0.049 | 0.8 | 4.98 | 4.45 | 3.62 | 3.38 | 1080 | 1113 | 27.1 |

Table 14 Test data of fibre paper 8

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 35 | 0.05 | 0.88 | 3.15 | 2.89 | 1.72 | 1.82 | 2235 | 2058 | 20.6 |

Table 15 Test data of fibre paper 9

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 37.6 | 0.050 | 0.75 | 3.42 | 2.93 | 2.17 | 2.13 | 887 | 846 | 19.8 |

Table 16 Test data of fibre paper 10

| Grammage | Thickness | Tightness | Tensile strength | | Elongation | | Tear strength | | Dielectric streng th |
|---|---|---|---|---|---|---|---|---|---|
| $g/m^2$ | mm | $g/cm^3$ | KN/m | | % | | mN | | kv/m m |
| | | | Longitudinal | Transverse | Longitudinal | Transverse | Longitudinal | Transverse | |
| 39.8 | 0.048 | 0.83 | 4.69 | 4.31 | 3.87 | 4.01 | 1022 | 982 | 28.2 |

Table 17 Test data of fibre paper 11

| Grammage | Thickness | Tightness | Tensile strength | | Elongation | | Tear strength | | Dielectric streng th |
|---|---|---|---|---|---|---|---|---|---|
| $g/m^2$ | mm | $g/cm^3$ | KN/m | | % | | mN | | kv/m m |
| | | | Longitudinal | Transverse | Longitudinal | Transverse | Longitudinal | Transverse | |
| 39 | 0.05 | 0.78 | 3.05 | 2.99 | 1.72 | 1.82 | 2235 | 2058 | 20 |

Table 18 Test data of fibre paper 12

| Grammage | Thickness | Tightness | Tensile strength | | Elongation | | Tear strength | | Dielectric streng th |
|---|---|---|---|---|---|---|---|---|---|
| $g/m^2$ | mm | $g/cm^3$ | KN/m | | % | | mN | | kv/m m |
| | | | Longitudinal | Transverse | Longitudinal | Transverse | Longitudinal | Transverse | |
| 39.5 | 0.055 | 0.72 | 4.03 | 3.48 | 1.77 | 1.89 | 2256 | 2068 | 24 |

Table 19 Test data of fibre paper 13

| Grammage | Thickness | Tightness | Tensile strength | | Elongation | | Tear strength | | Dielectric streng th |
|---|---|---|---|---|---|---|---|---|---|
| $g/m^2$ | mm | $g/cm^3$ | KN/m | | % | | mN | | kv/m m |
| | | | Longitudinal | Transverse | Longitudinal | Transverse | Longitudinal | Transverse | |
| 38.8 | 0.058 | 0.67 | 3.31 | 2.96 | 1.98 | 2.84 | 2245 | 2056 | 19.1 |

Table 20 Test data of fibre paper 14

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 41 | 0.055 | 0.75 | 3.53 | 3.17 | 2.98 | 2.08 | 2199 | 2059 | 19.9 |

Table 21 Test data of fibre paper 15

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 46 | 0.056 | 0.82 | 3.93 | 3.09 | 4.87 | 3.98 | 2106 | 2152 | 23.65 |

Table 22 Test data of fibre paper 16

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 47.2 | 0.065 | 0.73 | 4.95 | 4.09 | 7.40 | 7.98 | 1090 | 1178 | 25.3 |

Table 23 Test data of fibre paper 17

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longit dinal | Transv erse | Longitu dinal | Transv erse | Longitu dinal | Transv erse | |
| 43.9 | 0.055 | 0.8 | 3.15 | 2.89 | 3.40 | 3.98 | 998 | 1011 | 20 |

Table 24 Test data of fibre paper 18

| Gram mage | Thick ness | Tight ness | Tensile strength | | Elongation | | Tear strength | | Diele ctric streng th |
|---|---|---|---|---|---|---|---|---|---|
| g/m2 | mm | g/cm3 | KN/m | | % | | mN | | kv/m m |
| | | | Longitu dinal | Transv erse | Longitu dinal | Transv erse | Longitu dinal | Transv erse | |
| 43 | 0.058 | 0.74 | 3.25 | 2.69 | 2.11 | 2.08 | 2199 | 2122 | 19.2 |

By comparing the fibre papers 6 and 8, as well as the fibre papers 11 and 16, it could be seen that the fibre paper obtained using p-POD chopped fibre exhibited more excellent property (such as tensile strength, elongation and dielectric strength) as compared with the fibre paper obtained using poly(m-phenylene isophthalamide) chopped fibre, in the case where the same fibrids were used and the ratios between chopped fibre and fibrid were same.

By comparing the fibre papers 5 and 18, as well as the fibre papers 14 and 18, it could be seen that the fibre paper obtained using m-POD fibrid exhibited more excellent property (such as tensile strength, elongation and dielectric strength) as compared with the fibre paper obtained using poly(m-phenylene isophthalamide) fibrid, in the case where the same chopped fibres were used and ratios between chopped fibre and fibrid were same or similar.

In one preferred embodiment, the fibre paper of the present invention used both p-POD chopped fibre and m-POD fibrid. By comparing the fibre papers 5, 6 and 8, it could be seen that the fibre paper obtained using both p-POD chopped fibre and m-POD fibrid exhibited more excellent property (such as tensile strength, elongation and dielectric strength) as compared with the fibre paper obtained using p-POD chopped fibre or m-POD fibrid alone.

In one more preferred embodiment, the fibre paper of the present invention used p-POD chopped fibre with better property (such as mechanical property, dispersibility, purity and/or thermal stability) and m-POD. By comparing the fibre papers 7, 9 and 10, as well as the fibre papers 12 and 15, it could be seen that the fibre paper obtained using p-POD chopped fibre with better property (such as mechanical property, dispersibility, purity and/or thermal stability) exhibited more excellent property as compared with the fibre paper obtained using ordinary p-POD chopped fibre.

(4) Test of heat resistance of fibre paper

The heat resistance of fibre paper 6 was tested according to the standards IEC 60216 and IEEE 383-74. According to the test data in Table 25, it could be calculated that: the long-term use temperature of the fibre paper reached 240°C, and at this temperature the time-span of electrical thermal aging and the time-span of mechanical thermal aging both were greater than 22 years.

Table 25 Results of heat resistance test of fibre paper 6

| Temperature (°C) | Time-span of electrical thermal aging * (hours) | Time-span of mechanical thermal aging ** (hours) |
|---|---|---|
| 320 (measured) | 1170 | 568 |
| 340 (measured) | 380 | 171 |
| 360 (measured) | 90 | 57 |
| 380 (measured) | 26 | 19 |
| 400 (measured) | 6 | 9 |
| * Duration within which dielectric strength fell to 12 kv/mm<br>** Duration within which longitudinal tensile strength fell by half | | |

The results showed that the fibre paper of the present invention, which was prepared using p-POD chopped fibre and/or m-POD fibrid, in particular the fibre paper prepared using p-POD chopped fibre and m-POD fibrid, exhibited excellent uniformity, mechanical strength and electrical insulation, which had good comprehensive properties, especially excellent heat resistance, and could be used for a long term in occasions of grade C or above.

## Claims

1. A fibre paper, which comprises a chopped fibre and m-POD fibrid; wherein the chopped fibre is p-POD chopped fibre; wherein POD stands for aromatic polyoxadiazole.

2. The fibre paper according to claim 1, which has at least one of the following characteristics:

   (1) the m-POD fibrid has a specific surface area of 2-100 $m^2/g$;
   (2) the m-POD fibrid has an original beating degree of 25-100°SR;
   (3) the m-POD fibrid has a length of 0.1-7 mm and an aspect ratio of 50-1,000;
   (4) the m-POD fibrids has a thickness of 3-30 $\mu$m; and
   (5) the m-POD fibrid and the chopped fibre are in a mass ratio of 30-70: 30-70.

3. The fibre paper according to any one of claims 1-2, wherein the m-POD fibrid is prepared from an m-POD polymer having an intrinsic viscosity at 25°C of 1.0-5.0 dL/g.

4. The fibre paper according to claim 3, wherein the m-POD polymer is prepared by a method comprising the following steps:

(1) combining a fuming sulfuric acid, an isophthalic acid and a hydrazine salt to form a reaction mixture, in which the hydrazine salt is added in an amount of 30-85%, relative to the total amount of the hydrazine salt to be added in the method; the fuming sulfuric acid is added in an amount of 30-95%, relative to the total amount of the fuming sulfuric acid to be added; subjecting the reaction mixture to a reaction for 1-3 hours;
(2) adding the remaining hydrazine salt and the remaining fuming sulfuric acid, and continuing the reaction for 1-5 hours;
wherein the total amounts of isophthalic acid, hydrazine salt and fuming sulfuric acid are in a molar ratio of 1: 0.4-1.5: 8-20.

5. The fibre paper according to claim 1, wherein the p-POD chopped fibre has an initial decomposition temperature of higher than 500°C.

6. The fibre paper according to claim 5, wherein the p-POD chopped fibre further has at least one of the following characteristics:

(a) the p-POD chopped fibre has a specific fracture strength of greater than 2.50 cN/dtex;
(b) the p-POD chopped fibre has a cyclization degree of greater than 80%;
(c) the p-POD chopped fibre has a dispersibility of less than 10 fibres/100 g; and
(d) the p-POD chopped fibre has a defect content of less than 5 mg/100 g.

7. The fibre paper according to claim 6, wherein the p-POD chopped fibre is prepared from a solution containing a p-POD polymer and having at least one of the following characteristics:

(a) the solution comprises a p-POD polymer and fuming sulfuric acid, wherein the p-POD polymer has an intrinsic viscosity of not less than 1.70 dL/g, and has an apparent viscosity at a temperature of 100-160°C of 50-120 Pa·S;
(b) the solution does not comprise a capping agent; and
(c) the solution has a content of 15-50 $\mu$m particles of less than 100/mL.

8. The fibre paper according to claim 7, wherein the solution containing the p-POD polymer is prepared by a method comprising the following steps:

(1) combining a fuming sulfuric acid, a terephthalic acid and a hydrazine salt to form a reaction mixture, in which the hydrazine salt is added in an amount of 30-85%, relative to the total amount of hydrazine salt to be added in the method; the fuming sulfuric acid is added in an amount of 30-95%, relative to the total amount of the fuming sulfuric acid to be added in the method; subjecting the reaction mixture to a reaction for 1-3 hours;
(2) adding the remaining hydrazine salt and the remaining fuming sulfuric acid, and continuing the reaction for 1-5 hours;
wherein the total amounts of terephthalic acid, hydrazine salt and fuming sulfuric acid are in a molar ratio of 1: 0.4-1.5: 8-20.

9. A method for preparing a fibre paper, comprising use of the m-POD fibrid as defined in any one of claims 1-4 and the p-POD chopped fibre as defined in any of claims 5-8;

10. Use of the fibre paper according to any one of claims 1-8 as insulating paper.

11. Use of the fibre paper according to any one of claims 1-8 for the preparation of an article.

12. An article, which comprises one or more layers of the fibre paper according to any one of claims 1-8.

13. The article according to claim 12, wherein the article is selected from the group consisting of an insulating material, a structural material and an electronic device or component.

14. The article according to any one of claims 12-13, which has at least one of the following characteristics:

(1) the insulating material is a composite insulating material;
(2) the structural material is a sandwich material; and
(3) the electronic device or component is a printed circuit board.

15. The article according to any one of claims 12-13, which has at least one of the following characteristics:

(1) the insulating material is a composite insulating paper or a laminated insulating article; and
(2) the structural material is a honeycomb sandwich material.

**Patentansprüche**

1. Faserpapier, das eine geschnittene Faser und m-POD-Fibrid umfasst; wobei die geschnittene Faser geschnittene p-POD-Faser ist; wobei POD für aromatisches Polyoxadiazol steht.

2. Faserpapier nach Anspruch 1, das mindestens eine der folgenden Eigenschaften aufweist:

(1) das m-POD-Fibrid weist eine spezifische Oberfläche von 2 bis 100 $m^2$/g auf;
(2) das m-POD-Fibrid weist einen ursprünglichen Mahlgrad von 25 bis 100°SR auf;
(3) das m-POD-Fibrid weist eine Länge von 0,1 bis 7 mm und ein Seitenverhältnis von 50 bis 1000 auf;
(4) das m-POD-Fibrid weist eine Dicke von 3 bis 30 $\mu$m auf; und
(5) das m-POD-Fibrid und die geschnittene Faser liegen in einem Massenverhältnis von 30 bis 70 : 30 bis 70 vor.

3. Faserpapier nach einem der Ansprüche 1 bis 2, wobei das m-POD-Fibrid aus einem m-POD-Polymer hergestellt ist, das bei 25 °C eine Grenzviskosität von 1,0 bis 5,0 dl/g aufweist.

4. Faserpapier nach Anspruch 3, wobei das m-POD-Polymer durch ein Verfahren hergestellt wird, das die folgenden Schritte umfasst:

(1) Kombinieren einer rauchenden Schwefelsäure, einer Isophthalsäure und eines Hydrazinsalzes zum Bilden eines Reaktionsgemisches, wobei das Hydrazinsalz in einer Menge von 30 bis 85 %, bezogen auf die Gesamtmenge des in dem Verfahren hinzuzugebenden Hydrazinsalzes, hinzugegeben wird; die rauchende Schwefelsäure in einer Menge von 30 bis 95 %, bezogen auf die Gesamtmenge der hinzuzugebenden rauchenden Schwefelsäure, hinzugegeben wird; Unterziehen des Reaktionsgemisches einer Reaktion während 1 bis 3 Stunden;
(2) Hinzugeben des verbleibenden Hydrazinsalzes und der verbleibenden rauchenden Schwefelsäure und Fortsetzen der Reaktion während 1 bis 5 Stunden;
wobei die Gesamtmengen an Isophthalsäure, Hydrazinsalz und rauchender Schwefelsäure in einem Molverhältnis von 1 : 0,4 bis 1,5 : 8 bis 20 vorliegen.

5. Faserpapier nach Anspruch 1, wobei die geschnittene p-POD-Faser eine Anfangszersetzungstemperatur von höher als 500 °C aufweist.

6. Faserpapier nach Anspruch 5, wobei die geschnittene p-POD-Faser ferner mindestens eine von den folgenden Eigenschaften aufweist:

(a) die geschnittene p-POD-Faser weist eine spezifische Bruchfestigkeit von höher als 2,50 cN/dtex auf;
(b) die geschnittene p-POD-Faser weist einen Cyclisierungsgrad von höher als 80 % auf;
(c) die geschnittene p-POD-Faser weist eine Dispergierbarkeit von weniger als 10 Fasern/100 g auf; und
(d) die geschnittene p-POD-Faser weist einen Defektgehalt von weniger als 5 mg/100 g auf.

7. Faserpapier nach Anspruch 6, wobei die geschnittene p-POD-Faser aus einer Lösung hergestellt wird, die ein p-POD-Polymer enthält und mindestens eine von den folgenden Eigenschaften aufweist:

(a) die Lösung umfasst ein p-POD-Polymer und rauchende Schwefelsäure, wobei das p-POD-Polymer eine Grenzviskosität von nicht weniger als 1,70 dl/g aufweist und bei einer Temperatur von 100 bis 160 °C eine

scheinbare Viskosität von 50 bis 120 Pa·S aufweist;
(b) die Lösung umfasst kein Verkappungsmittel; und
(c) die Lösung weist einen Gehalt an Partikeln von 15 bis 50 μm von weniger als 100/ml auf.

**8.** Faserpapier nach Anspruch 7, wobei die Lösung, die das m-POD-Polymer enthält, durch ein Verfahren hergestellt wird, das die folgenden Schritte umfasst:

(1) Kombinieren einer rauchenden Schwefelsäure, einer Terephthalsäure und eines Hydrazinsalzes zum Bilden eines Reaktionsgemisches, wobei das Hydrazinsalz in einer Menge 30 bis 85 %, bezogen auf die Gesamtmenge an in dem Verfahren hinzuzugebendem Hydrazinsalz, hinzugegeben wird; die rauchende Schwefelsäure in einer Menge von 30 bis 95 %, bezogen auf die Gesamtmenge der in dem Verfahren hinzuzugebenden rauchenden Schwefelsäure, hinzugegeben wird; Unterziehen des Reaktionsgemisches einer Reaktion während 1 bis 3 Stunden;
(2) Hinzugeben des verbleibenden Hydrazinsalzes und der verbleibenden rauchenden Schwefelsäure und Fortsetzen der Reaktion während 1 bis 5 Stunden;
wobei die Gesamtmengen an Terephthalsäure, Hydrazinsalz und rauchender Schwefelsäure in einem Molverhältnis von 1 : 0,4 bis 1,5 : 8 bis 20 vorliegen.

**9.** Verfahren zur Herstellung eines Faserpapiers, das die Verwendung des m-POD-Fibrids nach einem der Ansprüche 1 bis 4 und der geschnittenen p-POD-Faser nach einem der Ansprüche 5 bis 8 umfasst;

**10.** Verwendung des Faserpapiers nach einem der Ansprüche 1 bis 8 als Isolierpapier.

**11.** Verwendung des Faserpapiers nach einem der Ansprüche 1 bis 8 zur Herstellung eines Artikels.

**12.** Artikel, der eine oder mehrere Schichten des Faserpapiers nach einem der Ansprüche 1 bis 8 umfasst.

**13.** Verfahren nach Anspruch 12, wobei der Artikel aus der Gruppe ausgewählt wird, die aus einem Isoliermaterial, einem Strukturmaterial und einer/einem elektronischen Vorrichtung oder Bauelement besteht.

**14.** Artikel nach einem der Ansprüche 12 bis 13, der mindestens eine der folgenden Eigenschaften aufweist:

(1) das Isoliermaterial ist ein Verbundisoliermaterial;
(2) das Strukturmaterial ist ein Schichtwerkstoff; und
(3) die/das elektronische Vorrichtung oder Bauelement ist eine gedruckte Leiterplatte.

**15.** Artikel nach einem der Ansprüche 12 bis 13, der mindestens eine der folgenden Eigenschaften aufweist:

(1) das Isoliermaterial ist ein Verbundisolierpapier oder ein laminierter Isolierartikel; und
(2) das Strukturmaterial ist ein Wabenschichtwerkstoff.

## Revendications

**1.** Papier de fibre, qui comprend une fibre coupée et un fibride en m-POD ; dans lequel la fibre coupée est une fibre coupée en p-POD ; dans lequel POD signifie polyoxadiazole aromatique.

**2.** Papier de fibre selon la revendication 1, qui possède au moins l'une des caractéristiques suivantes :

(1) le fibride en m-POD possède une surface spécifique de 2 à 100 $m^2/g$ ;
(2) le fibride en m-POD possède un degré de raffinage d'origine de 25 à 100 °SR ;
(3) le fibride en m-POD possède une longueur de 0,1 à 7 mm et un rapport d'aspect de 50 à 1000 ;
(4) le fibride en m-POD possède une épaisseur de 3 à 30 μm ; et
(5) le fibride en m-POD et la fibre coupée sont dans un rapport massique de 30-70:30-70.

**3.** Papier de fibre selon l'une quelconque des revendications 1 à 2, dans lequel le fibride en m-POD est préparé à partir d'un polymère de m-POD ayant une viscosité intrinsèque à 25 °C de 1,0 à 5,0 dL/g.

**4.** Papier de fibre selon la revendication 3, dans lequel le polymère de m-POD est préparé par un procédé comprenant les étapes suivantes :

(1) la combinaison d'un acide sulfurique fumant, d'un acide isophtalique et d'un sel d'hydrazine pour former un mélange réactionnel, dans lequel le sel d'hydrazine est ajouté dans une quantité de 30 à 85 %, par rapport à la quantité totale du sel d'hydrazine devant être ajoutée dans le procédé ; l'acide sulfurique fumant est ajouté dans une quantité de 30 à 95 %, par rapport à la quantité totale de l'acide sulfurique fumant devant être ajoutée ; la soumission du mélange réactionnel à une réaction pendant de 1 à 3 heures ;
(2) l'ajout du sel d'hydrazine restant et de l'acide sulfurique fumant restant, et la poursuite de la réaction pendant de 1 à 5 heures ;
dans lequel les quantités totales d'acide isophtalique, de sel d'hydrazine et d'acide sulfurique fumant sont dans un rapport molaire de 1:0,4-1,5:8-20.

**5.** Papier de fibre selon la revendication 1, dans lequel la fibre coupée en p-POD possède une température de décomposition initiale supérieure à 500 °C.

**6.** Papier de fibre selon la revendication 5, dans lequel la fibre coupée en p-POD possède en outre au moins l'une des caractéristiques suivantes :

(a) la fibre coupée en p-POD possède une résistance à la rupture spécifique supérieure à 2,50 cN/dtex ;
(b) la fibre coupée en p-POD possède un degré de cyclisation supérieur à 80 % ;
(c) la fibre coupée en p-POD possède une capacité de dispersion inférieure à 10 fibres/100 g ; et
(d) la fibre coupée en p-POD possède une teneur en défauts inférieure à 5 mg/100 g.

**7.** Papier de fibre selon la revendication 6, dans lequel la fibre coupée en p-POD est préparée à partir d'une solution contenant un polymère de p-POD et ayant au moins l'une des caractéristiques suivantes :

(a) la solution comprend un polymère de p-POD et de l'acide sulfurique fumant, dans lequel le polymère de p-POD possède une viscosité intrinsèque non inférieure à 1,70 dL/g, et possède une viscosité apparente à une température de 100 à 160 °C de 50 à 120 Pa.s ;
(b) la solution ne comprend pas d'agent de recouvrement ; et
(c) la solution possède une teneur en particules de 15 à 50 μm inférieure à 100/mL.

**8.** Papier de fibre selon la revendication 7, dans lequel la solution contenant le polymère de p-POD est préparée par un procédé comprenant les étapes suivantes :

(1) la combinaison d'un acide sulfurique fumant, d'un acide téréphtalique et d'un sel d'hydrazine pour former un mélange réactionnel, dans lequel le sel d'hydrazine est ajouté dans une quantité de 30 à 85 %, par rapport à la quantité totale de sel d'hydrazine devant être ajoutée dans le procédé ; l'acide sulfurique fumant est ajouté dans une quantité de 30 à 95 %, par rapport à la quantité totale de l'acide sulfurique fumant devant être ajoutée dans le procédé ; la soumission du mélange réactionnel à une réaction pendant de 1 à 3 heures ;
(2) l'ajout du sel d'hydrazine restant et de l'acide sulfurique fumant restant, et la poursuite de la réaction pendant de 1 à 5 heures ;
dans lequel les quantités totales d'acide téréphtalique, de sel d'hydrazine et d'acide sulfurique fumant sont dans un rapport molaire de 1:0,4-1,5:8-20.

**9.** Procédé de préparation d'un papier de fibre, comprenant l'utilisation du fibride en m-POD tel que défini selon l'une quelconque des revendications 1 à 4 et de la fibre coupée en p-POD telle que définie selon l'une quelconque des revendications 5 à 8 ;

**10.** Utilisation du papier de fibre selon l'une quelconque des revendications 1 à 8 comme papier isolant.

**11.** Utilisation du papier de fibre selon l'une quelconque des revendications 1 à 8 pour la préparation d'un article.

**12.** Article, qui comprend une ou plusieurs couches du papier de fibre selon l'une quelconque des revendications 1 à 8.

**13.** Article selon la revendication 12, dans lequel l'article est sélectionné parmi le groupe constitué d'un matériau isolant, d'un matériau structurel et d'un dispositif ou composant électronique.

**14.** Article selon l'une quelconque des revendications 12 à 13, qui possède au moins l'une des caractéristiques suivantes :

(1) le matériau isolant est un matériau isolant composite ;
(2) le matériau structurel est un matériau sandwich ; et
(3) le dispositif ou composant électronique est une carte de circuit imprimé.

**15.** Article selon l'une quelconque des revendications 12 à 13, qui possède au moins l'une des caractéristiques suivantes :

(1) le matériau isolant est un papier isolant composite ou un article isolant stratifié ; et
(2) le matériau structurel est un matériau sandwich en nid d'abeilles.

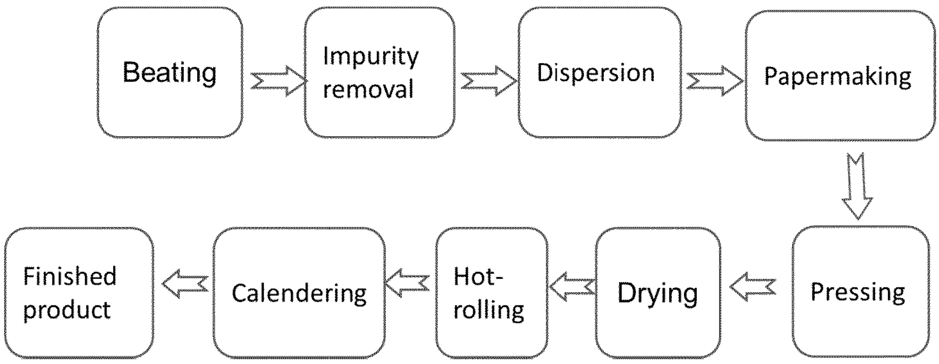
Beating
Impurity removal
Dispersion
Papermaking
Pressing
Drying
Hot-rolling
Calendering
Finished product

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201020010015
- CN 200910259778
- CN 200610069115
- CN 200810177301
- CN 201110133796